(19) Europäisches Patentamt
European Patent Office
Office européen des brevets

(11) EP 4 780 089 A1

(12) **EUROPEAN PATENT APPLICATION**
published in accordance with Art. 153(4) EPC

(43) Date of publication:
**22.07.2026 Bulletin 2026/30**

(21) Application number: **23952303.8**

(22) Date of filing: **15.09.2023**

(51) International Patent Classification (IPC):
***H04W 52/24*** *(2009.01)* ***H04W 16/28*** *(2009.01)*
***H04W 52/38*** *(2009.01)* ***H04W 74/0833*** *(2024.01)*

(52) Cooperative Patent Classification (CPC):
**H04W 16/28; H04W 52/24; H04W 52/38; H04W 74/0833**

(86) International application number:
**PCT/JP2023/033754**

(87) International publication number:
**WO 2025/057414 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
- **MATSUMURA, Yuki**
  **Tokyo 100-6150 (JP)**
- **NAGATA, Satoshi**
  **Tokyo 100-6150 (JP)**
- **WANG, Jing**
  **Beijing 100190 (CN)**
- **SUN, Weiqi**
  **Beijing 100190 (CN)**

(74) Representative: **Hoffmann Eitle Patent- und Rechtsanwälte PartmbB**
**Arabellastraße 30**
**81925 München (DE)**

# (54) TERMINAL, WIRELESS COMMUNICATION METHOD, AND BASE STATION

(57) A terminal according to one aspect of the present disclosure includes: a receiving section that receives, from a downlink (DL) transmission point, a Pathloss (PL) value to be used for uplink (UL) transmission power control; and a control section that controls, based on the PL value, transmission power of a case where a UL signal is transmitted to an uplink (UL) reception point. Whether or not the PL value is configured is configured for each ID of a transmission/reception point (TRP) or for each cell. According to one aspect of the present disclosure, it is possible to appropriately control UL transmission power.

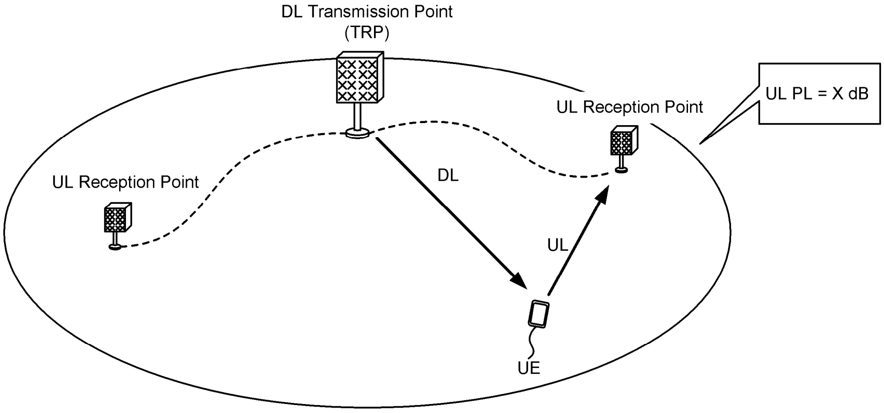


FIG.4



Processed by Luminess, 75001 PARIS (FR)

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems, it is studied that, to enhance UL coverage, a UL reception point is provided in addition to typical transmission/reception points. A Heterogeneous Network (HetNet) using a macro Base Station (BS) (DL transmission point) and a micro BS (UL reception point) and the like are also under study.

However, in a case where an RS for pathloss (PL) calculation (pathloss RS) is transmitted from a DL transmission point, it remains unclear how to determine a PL value for the UL reception point (or the micro BS) when a terminal (user terminal, User Equipment (UE)) performs UL transmission. Unless the PL value can be correctly determined, UL transmission power may not be controlled appropriately.

Thus, an object of the present disclosure is to provide a terminal, a radio communication method, and a base station that enable appropriate control of UL transmission power.

Solution to Problem

A terminal according to one aspect of the present disclosure includes: a receiving section that receives, from a downlink (DL) transmission point, a Pathloss (PL) value to be used for uplink (UL) transmission power control; and a control section that controls, based on the PL value, transmission power of a case where a UL signal is transmitted to an uplink (UL) reception point. Whether or not the PL value is configured is configured for each ID of a transmission/reception point (TRP) or for each cell.

Advantageous Effects of Invention

According to one aspect of the present disclosure, it is possible to appropriately control UL transmission power.

Brief Description of Drawings

[FIG. 1] FIG. 1A is a diagram to show an example of typical deployment of a transmission/reception point. FIG. 1B is a diagram to show an example of UL dense deployment.

[FIG. 2] FIG. 2 is a diagram to show an example of DL/UL coverage of a Heterogeneous Network (HetNet).

[FIG. 3] FIG. 3A is a diagram to show an example of association between RS indices and PL values. 3B is a diagram to show an example of association of RS indices and delta PL values.
[FIG. 4] FIG. 4 is a diagram to show an example of option 1 in UL high density deployment.
[FIG. 5] FIG. 5 is a diagram to show an example of option 2 in UL high density deployment.
[FIG. 6] FIG. 6 is a diagram to show an example of power control parameters for TCI state.
[FIG. 7] FIG. 7 is a diagram to show an example of a TCI-State information element of Rel. 17.
[Fig. 8] FIG. 8A and FIG. 8B show an example of a unified/common TCI framework.
[FIG.9] FIG. 9A and FIG. 9B are diagrams to show examples of UL power control parameters in Rel. 17.
[FIG. 10] FIG. 10 is a diagram to show an example of a system configuration in assumption 1.
[FIG. 11] FIG. 11 is a diagram to show an example of a system configuration in assumption 2 and assumption 3.
[Fig. 12] FIG. 12 is a diagram to show a first example of power control parameters for TCI state according to a second embodiment.
[FIG. 13] FIG. 13 is a diagram to show a second example of the power control parameters for the TCI state according to the second embodiment.
[FIG. 14] FIG. 14 is a diagram to show power control parameters for TCI state according to a third embodiment.
[FIG. 15] FIG. 15A and FIG. 15B are diagrams to show examples of a PL value configuration in the third embodiment.
[FIG. 16] FIG. 16A and FIG. 16B are diagrams to show examples of a relative PL value (PL offset) configuration in the third embodiment.
[FIG. 17] FIG. 17A and FIG. 17B are diagrams to show examples of a PL value configuration in a fourth embodiment.
[FIG. 18] FIG. 18A and FIG. 18B are diagrams to show examples of a relative PL value (PL offset) configuration in the fourth embodiment.
[FIG. 19] FIG. 19 shows an example in which a UE transmits a plurality of beams to the same UL reception point.
[FIG. 20] FIG. 20 shows an example in which a UE transmits a plurality of beams to different UL reception points.
[FIG. 21] FIG. 21 is a diagram to show an example of a schematic structure of a radio communication system according to one embodiment.
[FIG. 22] FIG. 22 is a diagram to show an example of a structure of a base station according to one embodiment.
[FIG. 23] FIG. 23 is a diagram to show an example of a structure of a user terminal according to one embodiment.
[FIG. 24] FIG. 24 is a diagram to show an example of a hardware structure of the base station and the user terminal according to one embodiment.
[FIG. 25] FIG. 25 is a diagram to show an example of a vehicle according to one embodiment.

## Description of Embodiments

### (Scenario 1: UL Dense Deployment (UL-only TRP))

In Rel-15 NR, coverages (reachable distances) of a PUSCH, PUCCH, PRACH, PDSCH, PDCCH, and PBCH are not equal to each other. The PUSCH coverage is restricted, especially at a high frequency. For future radio communication systems (for example, Rel. 18, Rel. 19, or later versions), improvement in at least one of UL coverage and UL throughput is under study.

It is studied that, to enhance UL coverage, a UL reception point is provided in addition to typical transmission/-reception points. Thus, an example of typical deployment of a transmission/reception point and an example of deployment provided with a UL reception point (UL dense deployment) will be described.

FIG. 1A is a diagram to show an example of typical deployment of a transmission/reception point. In FIG. 1A, each UE receives a DL signal from the transmission/reception point (TRP) and transmits a UL signal to the TRP. For example, the UE and the TRP being far from each other leads to large pathloss, which may degrade communication quality.

FIG. 1B is a diagram to show an example of UL dense deployment. It is studied that, to enhance UL coverage, such a UL reception point as that shown in FIG. 1B is provided in addition to such a TRP (DL transmission point) as that shown in FIG. 1A. In FIG. 1B, each UE receives a DL signal from a DL transmission point (TRP/central TRP/DL TRP) supporting macro cell and transmits a UL signal to a corresponding UL reception point (for example, a reception point with lower pathloss/received power). Note, however, that the UE can also perform UL transmission to the DL transmission point.

Using such UL dense deployment as that shown in FIG. 1B reduces pathloss, improves UL signaling quality, and obtains a higher coding rate, as compared to such typical deployment as that shown in FIG. 1A, thereby enabling both coverage and a UL data rate to be improved. The UL reception point primarily performs reception, and thus has a reduced number of required functions (such as a power amplifier, for example) and low cost as compared to a transmission/reception point corresponding to a typical small cell, leading to extremely simple deployment management.

(Scenario 2: Decoupling of DL TRP and UL TRP in HetNet)

In the present disclosure, a Heterogeneous Network (HetNet) using a macro Base Station (BS) (DL TRP) and a micro BS (UL TRP) may be applied (FIG. 2). In the normal HetNet, transmission power of the macro BS is different from that of the micro BS. The optimal DL coverage and the optimal UL coverage are different. For example, the DL coverage is determined by RSRP, and the UL coverage is determined by pathloss (PL).

In an example of FIG. 2, the UE is included in the optimal DL coverage of the macro BS and the optimal UL coverage of the micro BS. In this case, the UE can receive DL from the macro BS and transmit UL to the micro BS. Note, however, that the UE may transmit some reference signals/channels (for example, an SRS for Antenna switching (AS) usage used to acquire DL CSI) to the macro BS. Accordingly, there is a possibility that the UE requires two TAs in this scenario. Note that the SRS for AS is a signal for a base station (macro BS) to perform DL CSI measurement (for example, determination of a DL MIMO precoder) by using channel reciprocity, based on SRS reception, and thus is transmitted to the macro BS. On the other hand, an SRS for Codebook/Non-codebook usage is used for determination of a precoder/beam for the PUSCH, and thus is transmitted to the micro BS.

In the HetNet, even if the micro BS has a DL transmission capability, the energy of the micro BS can be saved by turning off DL almost all the time. In this case, the function of the micro BS is similar to that of a UL-only TRP (UL reception point).

(Transmission Power Control)

<Transmission Power Control for PUSCH>

In NR (for example, Rel. 16), the transmission power of a PUSCH is controlled based on a TPC command (also referred to as a value, an increase/decrease value, a correction value, or the like) indicated by a value of a certain field (also referred to as a TPC command field or the like) in DCI.

For example, in a case where a UE transmits a PUSCH on an active UL BWP b in a carrier f of a serving cell c by using a parameter set (open-loop parameter set) having index j and index l of a power control adjustment state, the transmission power ($P_{PUSCH,b,f,c}(i, j, q_d, l)$) of a PUSCH in a PUSCH transmission occasion (also referred to as a transmission period or the like) i may be expressed by equation (1) below.

[Math. 1]

$$P_{\mathrm{PUSCH}\ b,f,c}(i, j, q_d, l) =$$

$$= \min\begin{Bmatrix} P_{\mathrm{CMAX},f,c}(i), \\ P_{\mathrm{O_PUSCH}b,f,c}(j) + 10\log_{10}(2^{\mu} \cdot M^{\mathrm{PUSCH}}_{\mathrm{RB},b,f,c}(i)) + \alpha_{b,f,c}(j) \cdot PL_{b,f,c}(q_d) + \Delta_{\mathrm{TF},b,f,c}(i) + f_{b,f,c}(i,l) \end{Bmatrix} \ [\mathrm{dBm}] \quad (1)$$

Here, for the power control adjustment state, whether to have a plurality of states (for example, two states) or have a single state may be configured by a higher layer parameter. In a case where a plurality of power control adjustment states are configured, one of the plurality of power control adjustment states may be identified by index l (for example, $l \in \{0, 1\}$). The power control adjustment state may be referred to as a PUSCH power control adjustment state, a first or second state, or the like.

PUSCH transmission occasion i is a certain period in which a PUSCH is transmitted and may be constituted by, for example, one or more symbols, one or more slots, or the like.

In equation (1), $P_{CMAX,f,c}(i)$ is, for example, the transmission power of a user terminal configured for carrier f in serving cell c in transmission occasion i (also referred to as maximum transmission power, UE maximum output power, and the like). $P_{O_PUSCH,b,f,c}(j)$ is, for example, a parameter related to a target received power configured for the active UL BWP b in the carrier f of the serving cell c in the parameter set configuration j (for example, also referred to as a parameter related to a transmission power offset, a transmission power offset P0, a target received power parameter, and the like).

$M^{PUSCH}_{RB,b,f,c}(i)$ is, for example, the number of resource blocks (bandwidth) allocated to a PUSCH for the transmission occasion i in the active UL BWP b in the carrier f of the serving cell c with subcarrier spacing $\mu$. $\alpha_{b,f,c}(j)$ is a value provided by a higher layer parameter (for example, also referred to as msg3-Alpha, p0-PUSCH-Alpha, a fractional factor, and the like).

$PL_{b,f,c}(q_d)$ is, for example, pathloss (pathloss compensation) calculated by the user terminal by using the index $q_d$

of a reference signal (pathloss reference RS, DL RS for pathloss measurement, PUSCH-PathlossReferenceRS) for downlink BWP associated with the active UL BWP b in the carrier f of the serving cell c.

$\Delta_{TF,b,f,c}(i)$ is a transmission power adjustment component (offset, transmission format compensation) for the UL BWP b in the carrier f of the serving cell c.

$f_{b,f,c}(i, l)$ is a value based on the TPC command with the power control adjustment state index l of the active UL BWP in the carrier f of the serving cell c and the transmission occasion i (for example, a power control adjustment state, the accumulated value of TPC commands, a closed loop value). l may be referred to as a closed loop index.

When the UE is not provided with a pathloss reference RS (for example, PUSCH-PathlossReferenceRS) or the UE is not provided with a dedicated higher layer parameter, the UE may calculate $PL_{b,f,c}(q_d)$ by using an RS resource, based on an SSB used for obtaining a Master Information Block (MIB).

When the UE is configured with RS resource indices up to the number corresponding to the value of the maximum number of pathloss reference RSs (for example, maxNrofPUSCH-PathlossReferenceRSs) and a set of RS configurations for each of the RS resource indices by pathloss reference RSs, the set of RS resource indices may include one of or both a set of SS/PBCH block indices and a set of CSI-RS resource indices. The UE may identify an RS resource index $q_d$ in the set of RS resource indices.

When PUSCH transmission is scheduled by a Random Access Response (RAR) UL grant, the UE may use the same RS resource index $q_d$ as that for corresponding PRACH transmission.

When the UE is provided with a configuration of power control of a PUSCH by a sounding reference signal (SRS) resource indicator (SRI) (for example, SRI-PUSCH-PowerControl) and is provided with one or more values of the ID(s) of pathloss reference RS(s), the UE may obtain mapping between a set of values for an SRI field in DCI format 0_1 and a set of ID value(s) of the pathloss reference RS(s) by higher layer signaling (for example, sri-PUSCH-PowerControl-Id in SRI-PUSCH-PowerControl). The UE may determine the RS resource index $q_d$, based on the ID of the pathloss reference RS mapped in the SRI field value in DCI format 0_1 for scheduling the PUSCH.

When the PUSCH transmission is scheduled by DCI format 0_0 and the UE is not provided with PUCCH spatial relation information for a PUCCH resource with the lowest index for the active UL BWP b in each carrier f and serving cell c, the UE may use the same RS resource index $q_d$ as that for PUCCH transmission in the PUCCH resource.

When the PUSCH transmission is scheduled by DCI format 0_0 and the UE is not provided with spatial setting of the PUCCH transmission, when the PUSCH transmission is scheduled by DCI format 0_1 not including an SRI field, or when a configuration of power control of a PUSCH by an SRI is not provided to the UE, the UE may use the RS resource index $q_d$ with the pathloss reference RS ID of zero.

When a configured grant configuration (for example, ConfiguredGrantConfig) includes a certain parameter (for example, rrc-CofiguredUplinkGrant) for PUSCH transmission configured by the configured grant configuration, an RS resource index $q_d$ may be provided to the UE by a pathloss reference index (for example, pathlossReferenceIndex) in the certain parameter.

When the configured grant configuration does not include the certain parameter for the PUSCH transmission configured by the configured grant configuration, the UE may determine the RS resource index $q_d$, based on the value of the ID of the pathloss reference RS mapped in the SRI field in the DCI format for activating the PUSCH transmission. When the DCI format does not include an SRI field, the UE may determine the RS resource index $q_d$ with the pathloss reference RS ID of zero.

<Transmission Power Control for PUCCH>

In NR, the transmission power of a PUCCH is controlled based on a TPC command (also referred to as a value, an increase/decrease value, a correction value, an indication value, and the like) indicated by the value of a certain field (also referred to as a TPC command field, a first field, and the like) in DCI.

For example, by using the index l of a power control adjustment state, the transmission power ($P_{PUCCH,b,f,c}(i, j, q_d, l)$) of a PUCCH in the PUCCH transmission occasion (also referred to as a transmission period or the like) i for a PUCCH on the active UL BWP b in the carrier f of the serving cell c may be expressed by equation (2) below.

[Math. 2]

$P_{PUCCH,b,f,c}(i, q_u, q_d, l)$ :

$$= \min \begin{Bmatrix} P_{CMAX,f,c}(i), \\ P_{O_PUCCH,b,f,c}(q_u) + 10\log_{10}(2^{\mu} \cdot M^{PUCCH}_{RB,b,f,c}(i)) + PL_{b,f,c}(q_d) + \Delta_{F_PUCCH}(F) + \Delta_{TF,b,f,c}(i) + g_{b,f,c}(i,l) \end{Bmatrix} \text{ [dBm]} \quad (2)$$

The power control adjustment state may be referred to as a PUCCH power control adjustment state, a first or second state, or the like.

PUCCH transmission occasion i is a certain period in which a PUCCH is transmitted and may be constituted by, for example, one or more symbols, one or more slots, or the like.

In equation (2), $P_{CMAX,f,c}(i)$ is, for example, the transmission power of a user terminal configured for carrier f in serving cell c in transmission occasion i (also referred to as maximum transmission power, UE maximum output power, and the like). $P_{O_PUCCH,b,f,c}(q_u)$ is, for example, a parameter related to a target received power configured for the active UL BWP b in the carrier f of the serving cell c in the transmission occasion i (for example, also referred to as a parameter related to a transmission power offset, a transmission power offset P0, or a target received power parameter, and the like).

$M^{PUCCH}_{RB,b,f,c}(i)$ is, for example, the number of resource blocks (bandwidth) allocated to a PUCCH for the transmission occasion i in the active UL BWP b in the carrier f of the serving cell c with subcarrier spacing $\mu$. $PL_{b,f,c}(q_d)$ is, for example, pathloss calculated by the user terminal by using the index $q_d$ of a reference signal (pathloss reference RS, DL RS for pathloss, PUCCH-PathlossReferenceRS) for downlink BWP associated with the active UL BWP b in the carrier f of the serving cell c.

$\Delta_{F_PUCCH}(F)$ is a higher layer parameter given for each PUCCH format. $\Delta_{TF,b,f,c}(i)$ is a transmission power adjustment component (offset) for the UL BWP b in the carrier f of the serving cell c.

$g_{b,f,c}(i, l)$ is a value based on the TPC command with the power control adjustment state index l of the active UL BWP in the carrier f of the serving cell c and the transmission occasion i (for example, the power control adjustment state, the accumulated value of TPC commands, the closed loop value, and the PUCCH power adjustment state).

If the UE is provided with information indicating use of two PUCCH power control adjustment states (twoPUCCH-PC-AdjustmentStates) and PUCCH spatial relation information (PUCCH-SpatialRelationInfo), l = {0, 1} may hold. If the UE is not provided with the information indicating use of two PUCCH power control adjustment states or PUCCH spatial relation information, l = 0 may hold.

If the UE obtains a TPC command value from DCI format 1_0 or 1_1 and the UE is provided with the PUCCH spatial relation information, the UE may obtain mapping between a PUCCH spatial relation information ID (pucch-SpatialRelationInfoId) value and a closed loop index (closedLoopIndex, power adjustment state index l), by an index provided by P0 ID for PUCCH (p0-PUCCH-Id in p0-Set in PUCCH-PowerControl in PUCCH-Config). When the UE receives an activation command including the value of the PUCCH spatial relation information ID, the UE may determine the value of the closed loop index providing the value l, via the link to the corresponding P0 ID for PUCCH.

If the UE is provided with a configuration of a $P_{O_PUCCH,b,f,c}(q_u)$ value for the corresponding PUCCH power adjustment stat l for the active UL BWP b in the carrier f of the serving cell c by a higher layer, $g_{b,f,c}(i, l) = 0$ and k = 0, 1, ..., i hold. If the UE is provided with the PUCCH spatial relation information, the UE may determine the value l from a value $q_u$, based on the PUCCH spatial relation information associated with the P0 ID for PUCCH corresponding to $q_u$ and the closed loop index value corresponding to l.

$q_u$ may be the P0 ID for PUCCH (p0-PUCCH-Id) indicating P0 for PUCCH (P0-PUCCH) in P0 set for PUCCH (p0-Set).

<Transmission Power Control for SRS>

For example, by using the index l of a power control adjustment state, the transmission power ($P_{SRS,b,f,c}(i, q_s, l)$) of an SRS in a reference signal for measurement (Sounding Reference Signal (SRS)) transmission occasion (also referred to as a transmission period or the like) i for the active UL BWP b in the carrier f of the serving cell c may be expressed by equation (3) below.

The power control adjustment state may be referred to as an SRS power control adjustment state, a value based on a TPC command, the accumulated value of TPC commands, a closed-loop value, a first or second state, or the like. l may be referred to as a closed-loop index.

SRS transmission occasion i is a certain period in which an SRS is transmitted and may be constituted by, for example, one or more symbols, one or more slots, or the like.

[Math. 3]

$$P_{SRS,b,f,c}(i,q_s,l) = \min\begin{Bmatrix} P_{CMAX,f,c}(i), \\ P_{O_SRS,b,f,c}(q_s) + 10\log_{10}(2^{\mu}\cdot M_{SRS,b,f,c}(i)) + \alpha_{SRS,b,f,c}(q_s)\cdot PL_{b,f,c}(q_d) + h_{b,f,c}(i,l) \end{Bmatrix} \text{ [dBm]} \quad (3)$$

In equation (3), $P_{CMAX,f,c}(i)$ is, for example, UE maximum output power for the carrier f of the serving cell c in the SRS transmission occasion i. $P_{O_SRS,b,f,c}(q_s)$ is a parameter (also referred to as, for example, a parameter related to a transmission power offset, a transmission power offset P0, or a target received power parameter) related to target received power provided by p0 for the active UL BWP b in the career f of the serving cell c and an SRS resource set $q_s$ (provided by SRS-ResourceSet and SRS-ResourceSetId).

$M_{SRS,b,f,c}(i)$ is an SRS bandwidth expressed by the number of resource blocks for the SRS transmission occasion i on the active UL BWP b in the career f of the serving cell c with subcarrier spacing $\mu$.

$\alpha_{SRS,b,f,c}(q_s)$ is provided by $\alpha$ (for example, alpha) for the active UL BWP b in the carrier f of the serving cell c with the subcarrier spacing $\mu$ and the SRS resource set $q_s$.

$PL_{b,f,c}(q_d)$ is a DL pathloss estimate [dB] calculated by a UE by using an RS resource index $q_d$, for the active DL BWP in the serving cell c and the SRS resource set $q_s$. The RS resource index $q_d$ is a pathloss reference RS (provided by a DL RS for pathloss measurement, for example, pathlossReferenceRS) associated with the SRS resource set $q_s$, and is an SS/PBCH block index (for example, ssb-Index) or a CSI-RS resource index (for example, csi-RS-Index).

$h_{b,f,c}(i, l)$ is an SRS power control adjustment state for the active UL BWP in the carrier f of the serving cell c and the SRS transmission occasion i. When the configurations of the SRS power control adjustment state (for example, srs-PowerControlAdjustmentStates) indicate the same power control adjustment state for SRS transmission and PUSCH transmission, $h_{b,f,c}(i, l)$ is the same as the current PUSCH power control adjustment state $f_{b,f,c}(i, l)$.

The PUSCH, PUCCH, or SRS transmission occasion i may be defined by a slot index $n_{s,f}^{\mu}$ in a frame of a system frame number SFN, the first symbol S in a slot, and the number L of consecutive symbols. In a case of repetition type B PUSCH transmission, PUSCH transmission occasions may be nominal repetitions.

<Transmission Power Control for PRACH>

Actual Physical random access channel (PRACH) transmission power is determined based on target preamble reception power, the pathloss of an RS, and the maximum output power limit.

A UE determines the (actual) transmission power $P_{PRACH,b,f,c}(i)$ of a PRACH on the active UL BWP b in the carrier f of the serving cell c, based on a DL RS for the serving cell c in the transmission occasion i, as in the following equation.

[Math. 4]

$$P_{PRACH,b,f,c}(i) = \min\{P_{CMAX,f,c}(i), P_{PRACH,target,f,c} + PL_{b,f,c}\} \text{ [dBm]} \quad (4)$$

$P_{CMAX,f,c}(i)$ is the maximum output power configured to the UE for the carrier f in the serving cell c in the transmission occasion i. $P_{PRACH,target,f,c}$ is PRACH target received power PREAMBLE_RECEIVED_TARGET_POWER provided by a higher layer for the active UL BWP b in the carrier f of the serving cell c. $PL_{b,f,c}$ is pathloss for the active UL BWP b in the carrier f based on the DL RS associated with PRACH transmission on the active DL BWP in the serving cell c, and is calculated by the UE as (reference signal power (referenceSignalPower, ss-PBCH-BlockPower) [dBm] - higher layer filtered RSRP [dBm]) [dB]. If the active DL BWP is the initial DL BWP and is for multiplexing pattern 2 or 3 for SS/PBCH block and CORESET, the UE determines $PL_{b,f,c}$, based on an SS/PBCH block associated with the PRACH transmission.

The DL RS used for the pathloss calculation may be referred to as a pathloss (PL)-RS, a pathloss reference RS, and the like.

In an existing RACH process (procedure), if a UE transmits a PRACH and does not receive a RAR of a network or Msg4 of contention/conflict resolution within a specific time window, and hence a random access process is not completed, the UE retransmits the PRACH after a random backoff time.

(Reception of Pathloss (PL))

The UE may receive, via DL signaling, first information indicating pathloss (PL) estimated and notified (transmitted) by a network and used for transmission power control (TPC). The DL signaling may be at least one of higher layer signaling (for example, RRC or a MAC CE) and physical layer signaling (for example, downlink control information (DCI)).

The UE may calculate UL signal transmission power (for example, the transmission power of a PUSCH ($P_{PUSCH,b,f,c}(i, j, q_d, l)$) in equation (1), the transmission power of a PUCCH ($P_{PUCCH,b,f,c}(i, q_u, q_d, l)$) in equation (2), the transmission power of an SRS ($P_{SRS,b,f,c}(i, q_s, l)$) in equation (3), and the transmission power of a PRACH ($P_{PRACH,b,f,c}(i)$) in equation (4)) for a reception point that does not transmit downlink data, by using received pathloss ($PL_{b,f,c}(q_d)$, $PL_{b,f,c}$).

{Option 1} A network may notify the UE of an absolute pathloss (PL) value [dB] for each RS index (transmit the absolute pathloss value to the UE). The UE may directly use the notified absolute pathloss value for calculation of the transmission power.

{Option 2} The network may notify the UE of a relative pathloss (delta PL) value [dB] for each RS index (transmit the relative pathloss value to the UE). The UE may use a pathloss value obtained by applying (adding or subtracting) the received delta PL value to a pathloss value estimated from a DL RS transmitted from a macro cell (central TRP) in an existing manner, for calculation of the transmission power.

Notification/configuration of the PL value/delta PL value in options 1 and 2 may be performed for each index of $q_d$/SSB/CSI-RS/SRS resource/SRS resource set. Notification of one or a plurality of RS indices and the PL value/delta PL value corresponding to each RS index may be performed by DL signaling. The PL value/delta PL value may be interpreted as a PL parameter/delta PL parameter.

FIG. 3A is a diagram to show an example of association between RS indices and PL values. FIG. 3B is a diagram to show an example of association of RS indices and delta PL values. The association (correspondence) between the RS indices and the PL values/delta PL values is not limited to FIG. 3A and FIG. 3B. For example, one RS index may correspond to a plurality of PL values/delta PL values. Note that the quantization table (range and step) of the PL values/delta PL values may be defined in advance in a specification. A PL value/delta PL value to be notified may be a quantized value or the index of the quantized value.

FIG. 4 is a diagram to show an example of option 1 in UL high density deployment. A UL reception point receives/measures a UL signal. When a DL transmission point (TRP/gNB) knows the transmission power of the UL signal, the DL transmission point can know the accurate PL value of the UL reception point. In this case, the DL transmission point can notify the UE of the absolute PL value (X [dB]) of the UL reception point.

FIG. 5 is a diagram to show an example of option 2 in UL high density deployment. When both a DL transmission point (TRP/gNB) and a UL reception point measure the same resource, the DL transmission point may recognize the difference between the PL between the DL transmission point and a UE and the PL between the UL reception point and the UE. In this case, the DL transmission point may notify the UE of the difference (relative PL/delta PL). The relative PL/delta PL may be referred to as a PL offset.

As described above, even when the UE is not notified of a DL RS (RS index) used for pathloss estimation, the UE can calculate transmission power by using the notified PL value/delta PL value.

(TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

(UL Power Control Parameter for TCI State)

FIG. 6 is a diagram to show an example of power control parameters for TCI state. As shown in FIG. 6, a pathloss RS and the power control parameters for PUSCH/PUCCH/SRS are associated with the TCI state.

When a TCI state of Rel. 17 is configured, a TCI state and spatial relation information (except positioning) of Rel. 15/16 cannot be configured in the same band. For a channel/RS to which an indicated TCI state is not applied, a TCI state of Rel. 17 may be configured instead of a TCI state and spatial relation information of Rel. 15/16.

A UE may transmit UE capability information indicating that different power control parameters are associated with each TCI state. When the UE does not support this UE capability, a default power control parameter may be used. FIG. 7 is a diagram to show an example of a TCI-State information element of Rel. 17. A default power control parameter is, for example, the pathloss reference RS-ID (pathlossReferenceRS-Id-r17) in FIG. 7.

(Unified/Common TCI Framework)

According to the unified TCI framework, a plurality of types (UL/DL) of channels/RSs can be controlled by a common framework. The unified TCI framework may indicate a common beam (common TCI state) and apply the common beam to all UL and DL channels, or may apply a common beam for UL to all UL channels while applying a common beam for DL to all DL channels, instead of defining a TCI state or a spatial relation for each channel as in Rel. 15.

One common beam for both DL and UL or a common beam for DL and a common beam for UL (two common beams in total) are under study.

The UE may assume the same TCI state (joint TCI state, joint TCI pool, joint common TCI pool, joint TCI state set) for UL and DL. The UE may assume different TCI states (separate TCI state, separate TCI pool, UL separate TCI pool and DL separate TCI pool, separate common TCI pool, UL common TCI pool and a DL common TCI pool) for each of UL and DL.

Default beams of UL and DL may be brought to match by beam management based on a MAC CE (MAC CE-level beam indication). A default TCI state for PDSCH may be updated to match a default UL beam (spatial relation).

A common beam/unified TCI state may be indicated from the same TCI pool (joint common TCI pool, joint TCI pool, set) for both UL and DL by DCI-based beam management (DCI-level beam indication). X (> 1) TCI states may be activated by the MAC CE. UL/DL DCI may select one from X active TCI states. The selected TCI state may be applied to both UL and DL channels/RSs.

The TCI pool (set) may be a plurality of TCI states configured by an RRC parameter, or may be a plurality of TCI states (active TCI states, active TCI pool, set) activated by a MAC CE among a plurality of TCI states configured by an RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) applied to a UL channel/RS and the number M (≥ 1) of TCI states (DL TCI states) applied to a DL channel/RS may be defined. Notification/configuration/indication of at least one of N and M may be made to a UE by higher layer signaling or physical layer signaling.

In the present disclosure, when it is described as N = M = X (where X is any integer), this may mean that X TCI states (corresponding to X TRPs) common to UL and DL (joint TCI states) may be notified/configured/indicated to a UE. When N = X (X is any integer) and M = Y (Y is any integer, and M = Y may hold) are described, this may mean that X UL TCI states (corresponding to X TRPs) and Y DL TCI states (corresponding to Y TRPs) (i.e., separate TCI states) may be notified/configured/indicated to the UE.

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that a plurality of (two) TCI states common to UL and DL for a plurality of (two) TRPs are notified/configured/indicated to a UE (joint TCI states for a plurality of TRPs).

For example, when it is described as N = 2 and M = 2, this may mean that a plurality of (two) UL TCI states and a plurality of (two) DL TCI states for a plurality of (two) TRPs are notified/configured/indicated to a UE (separate TCI states for a plurality of TRPs).

Note that, in the above examples, cases where the values of N and M are each one or two have been described, but the values of N and M may each be three or more, and N and M may be different from each other.

It is studied that N = M = 1 is supported in Rel. 17. It is studied that other cases are supported in Rel. 18 and later versions.

In the example in FIG. 8A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 8A, one dot may represent one TCI state applied to both UL and DL or may represent two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 8B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR or later versions, it is assumed that activation/indication of beams to TCI states associated with different physical cell identifiers (PCIs) by a MAC CE/DCI is supported. In Rel-18 NR or later versions, it is assumed that indication of change of a serving cell to a cell having a different PCI by a MAC CE/DCI is supported.

(UL Power Control Parameter of Unified TCI State in Rel. 17)

In a unified TCI state in Rel. 17, a UE is provided with a UL power control parameter (RRC information element "uplink-powerControl-r17") included in a UE-specific UL BWP configuration (RRC information element "BWP-UplinkDedicated") (see FIG. 9A). When UL power control (ul-powerControl) for the UL TCI state/joint TCI state of a serving cell is not configured for the UE, the parameter is used for transmission power control of UL transmission.

The UL power control parameter (RRC information element "uplink-powerControl-r17") includes a UL power control parameter ID (Uplink-powerControlId-r17), and the UL power control parameter is identified by the ID.

The UL power control parameter (RRC information element "uplink-powerControl-r17") includes at least one of a set of P0 and $\alpha$ for PUSCH (p0AlphaSetforPUSCH-r17), a set of P0 and $\alpha$ for PUCCH (p0AlphaSetforPUCCH-r17), and a set of P0 and $\alpha$ for SRS (p0AlphaSetforSRS-r17), which are used for transmission power control of each channel/signal (see FIG. 9B).

(Analysis)

As described above, it is studied that, to enhance UL coverage, a UL reception point is provided in addition to typical transmission/reception points. A Heterogeneous Network (HetNet) using a macro Base Station (BS) (DL transmission point) and a micro BS (UL reception point) and the like are also under study.

However, in a case where an RS for pathloss (PL) calculation (pathloss RS) is transmitted from a DL transmission point, it remains unclear how to determine a PL value for a UL reception point (or a micro BS) when a terminal performs UL transmission. Unless the PL value can be correctly determined, UL transmission power may not be controlled appropriately.

Thus, the inventors of the present invention came up with the idea of a method for enabling appropriate control of UL transmission power.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, an indicated TCI state, a unified TCI state, a unified TCI state in which multi-TRP is not configured/used/applied, a unified TCI state defined in Rel. 17, a Rel-17 unified TCI state, and a first unified TCI state may be interchangeably interpreted.

In the present disclosure, an indicated TCI state, a unified TCI state, a unified TCI state in which multi-TRP is configured/used/applied, a unified TCI state in which multi-TRP can be configured/used/applied, an indicated TCI state in which multi-TRP is configured/used/applied, an indicated TCI state in which multi-TRP can be configured/used/applied, a unified TCI state defined in Rel. 18, a Rel-18 unified TCI state, a unified TCI state for multi-TRP, and a second unified TCI state may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

A UL reception point may be connected to a TRP (for example, a base station or the like) or a core network via a wired connection or a wireless connection. The UL reception point may be treated as a network (NW) or a base station. The UL reception point may be capable of transmitting a downlink (DL) signal (for example, a PL value), and may be applied to a base station forming a macro cell. For example, the UL reception point may not transmit downlink data, and may transmit a control signal/channel.

In the present disclosure, a base station, a UL reception point, a UL TRP, a UL-only TRP, and a micro BS may be interchangeably interpreted. The UL reception point may perform only UL reception, or may perform DL transmission when a condition is satisfied.

In the present disclosure, a base station, a DL transmission point, a DL TRP, a DL-only TRP, a macro BS, and a central TRP may be interchangeably interpreted. The DL transmission point may perform only DL transmission, or may perform UL reception when a condition is satisfied.

In the present disclosure, UL dense deployment, a distributed TRP mode, a separated location mode of a transmission/reception point, a distributed transmission/reception mode, a separated TRP mode, TRP type 1, TRP type 2, TRP type A, and TRP type B may be interchangeably interpreted.

The present disclosure may presuppose multi-DCI based multi-TRP, single-DCI based multi-TRP, or at least one of scenario 1 and scenario 2 above.

In the present disclosure, being configured and receiving a configuration (configuration information) may be interchangeably interpreted.

In the present disclosure, a TCI state, a TCI state ID, a TCI state list/set/pool/group, and a TCI state list/set/pool/group ID may be interchangeably interpreted.

In the present disclosure, absolute PL, pathloss (PL), a pathloss value, and a pathloss parameter may be interchangeably interpreted. In the present disclosure, relative PL, delta PL, a PL offset, an offset of $P_O$, an offset of $\alpha$, an offset of power/power density [x dBm], pathloss (PL), a PL value, and a PL parameter may be interchangeably interpreted. In the present disclosure, PL, a PL value, a PL RS, and a PL RSID may be interchangeably interpreted.

(Radio Communication Method)

<Zeroth Embodiment>

Each example in the present disclosure may presuppose any of assumptions 1 to 3 below. For example, a UE receives a PL value/relative PL value to be used for transmission power control of a PUSCH/SRS from a macro TRP (DL transmission point) in advance by higher layer signaling/physical layer signaling, and controls transmission power of a case of transmitting the PUSCH/SRS to a UL reception point/DL transmission point, based on the received PL value/relative PL value. The relative PL value may be a difference value between the PL between the DL transmission point and the UE and the PL between the UL reception point and the UE.

{Assumption 1}

Assumption 1 applies a single-TRP framework. In other words, a single-DCI/multi-DCI TRP framework is not used. As shown in FIG. 10, the UE transmits a PUSCH only to a UL reception point (micro TRP) and does not transmit a PUSCH to a macro TRP (DL transmission point). The UE can transmit an SRS to a UL reception point or a macro TRP.

{Assumption 2}

Assumption 2 applies a single-TRP framework. In other words, a single-DCI/multi-DCI TRP framework is not used. As shown in FIG. 11, the UE transmits a PUSCH to a UL reception point (micro TRP) and a macro TRP (DL transmission point) at different timings (t1, t1 + 1) (dynamic scheduling). The UE can transmit an SRS to a UL reception point or a macro TRP.

{Assumption 3}

Assumption 3 applies a multi-TRP framework. In other words, a single-DCI/multi-DCI TRP framework is used. As shown in FIG. 11, the UE transmits a PUSCH to a UL reception point (micro TRP) and a macro TRP (DL transmission point) at different timings (t1, t1 + 1) (dynamic scheduling). The UE can transmit a Sounding Reference Signal (SRS) for channel quality measurement to the UL reception point or the macro TRP.

For example, in assumptions 1 to 3, the UE transmits an SRS configured with codebook (CB)/non-codebook (NCB) as usage, to a TRP/gNB being the transmission destination of the PUSCH. The UE transmits an SRS configured with antenna switching as usage to the macro TRP being the transmission source of the PDSCH.

In assumptions 1 to 3, the UL reception point and the macro TRP may be associated with the same cell (serving cell)/PCI. Alternatively, the UL reception point and the macro TRP may be associated with different cells (serving cells)/PCIs.

For example, when UL transmission performed periodically based on transmission without dynamic grant (configured grant) is configured, the UE may determine that assumption 1 is applied. In other words, the UE may transmit the PUSCH only to the UL reception point (micro TRP).

<First Embodiment>

In the present embodiment, a description will be given of how to enable signaling of an absolute PL value or a relative PL (delta PL) value described above in a case where a unified TCI framework is applied. For example, how to distinguish between a UL reception point and a macro TRP associated with a PUSCH/PUCCH/SRS/PRACH to perform signaling of the absolute PL value or the relative PL (delta PL) of a PUSCH/PUCCH/SRS/PRACH associated with a UL reception point will be described.

{Option 1}

Processing of cases where both the UL reception point and the macro TRP are associated with the same cell/PCI (serving cell/PCI of the serving cell) and any of assumptions 1 to 3 above is applied will be described.

<<Case of Assumption 1>>

A UE may always transmit a PUSCH to the UL reception point. Accordingly, the UE is configured with a PL value/relative PL value for the PUSCH. However, the UE transmits an SRS to either the UL reception point or the macro TRP. Hence, it is necessary to distinguish between the PL value/relative PL value of the UL reception point and the PL value/relative PL value of the macro TRP. For a PUCCH/PRACH, the UE may be configured/indicated with "always transmitting a PUCCH/PRACH to a UL reception point" or "transmitting a PUCCH/PRACH to a UL reception point or a macro TRP", and may perform UL transmission, based on the configuration/indication.

The UE may distinguish between the UL reception point and the macro TRP for each TCI state (joint/UL TCI state), or for each UL channel/RS and for each TCI state (joint/UL TCI state).

<<Case of Assumption 2>>

In order to dynamically switch the transmission destination of a PUSCH/SRS to either the UL reception point or the macro TRP, a UE needs to distinguish between the PL value/relative PL value of the UL reception point and the PL value/relative PL value of the macro TRP. For a PUCCH/PRACH, the UE may be configured/indicated with "always transmitting a PUCCH/PRACH to a UL reception point" or "transmitting a PUCCH/PRACH to a UL reception point or a macro TRP", and may perform UL transmission, based on the configuration/indication.

The UE may distinguish between the UL reception point and the macro TRP for each TCI state (joint/UL TCI state), for each SRS resource set, or for each TAG.

<<Case of Assumption 3>>

In order to dynamically switch the transmission destination of a PUSCH/SRS to either the UL reception point or the macro TRP, a UE needs to distinguish between the PL value/relative PL value of the UL reception point and the PL value/relative PL value of the macro TRP. For a PUCCH/PRACH, the UE may be configured/indicated with "always transmitting a PUCCH/PRACH to a UL reception point" or "transmitting a PUCCH/PRACH to a UL reception point or a macro TRP."

The UE may distinguish between the UL reception point and the macro TRP for each TCI state (joint/UL TCI state) or for each TRP ID. In other words, in a case of single DCI, the UE may perform the distinguishing by using the first TCI or the second TCI. In a case of multi-DCI, the UE may perform the distinguishing by using CORESETPoolIndex = {0, 1}.

{Option 2}

In a case where the UL reception point and the macro TRP are associated with different cells/PCIs (serving cells/PCIs of the serving cells) and any of assumptions 1 to 3 above is applied, the UE may distinguish the UL reception point and the macro TRP for each TCI state (joint/UL TCI state), for each PCI, or for each TCI state (joint/UL TCI state) and for each PCI. Option 2 is similar to option 1 otherwise.

<Second Embodiment>

{Aspect 2-1}

A case where a UL power control parameter is configured (or not configured) for a UL TCI state or a joint TCI state of a serving cell will be described. Whether or not a PL value or a relative PL (delta PL) value is configured may be determined/configured for each TCI state ID. A PL value or a relative PL (delta PL) value may be determined/configured for each TCI state ID.

In a unified TCI state of Rel. 17, an RRC parameter (Uplink-powerControlId-r17) indicating UL power control is configured for the UE for each TCI state or UL TCI state, to indicate TPC parameters (excluding a PL RS). The UE may be additionally configured with information indicating a PL value or a relative PL (delta PL) value as an option field of a TCI state (or a UL TCI state) or Uplink-powerControlId-r17.

When additional information indicating a PL value or a relative PL value is not configured for a TCI state or a UL TCI state (RRC parameter TCI-State or RRC parameter TCI-UL-State-r17), the UE may determine that the TCI state is associated with a macro TRP (DL transmission point).

When additional information indicating a PL value or a relative PL is configured for a TCI state or UL TCI state (parameter TCI-State or parameter TCI-UL-State-r17), the UE may determine that the TCI state is associated with a UL reception point.

A TCI state (RRC parameter TCI-State), a UL TCI state (RRC parameter TCI-UL-State-r17), and an RRC parameter indicating UL power control associated with a TCI state (Uplink-powerControlId-r17) may be interchangeably interpreted.

FIG. 12 is a diagram to show a first example of power control parameters for TCI state according to the second embodiment. As shown in FIG. 7, the configuration of a TCI state includes a parameter indicating a pathloss RS (pathlossReferenceRS-Id-r17) and a UL power control parameter (ul-powerControl-r17). As shown in FIG. 9B, ul-powerControl-r17 includes parameters indicating $P_0$ and $\alpha$ of a PUSCH, a PUCCH, and an SRS (p0AlphaSetforPUSCH-r17, p0AlphaSetforPUCCH-r17, and p0AlphaSetforSRS-r17). In the example shown in FIG. 12, TCI state #1 includes only these existing RRC parameters, but TCI state #3 further includes a relative PL (PL offset) value.

In the example of FIG. 12, a UE may use, for calculation of transmission power, a PL value obtained by applying (adding or subtracting) a received relative PL (PL offset) value to (from) a PL value estimated from a DL RS transmitted from a macro TRP.

FIG. 13 is a diagram to show a second example of power control parameters for TCI state according to the second embodiment. The example shown in FIG. 13 is different from the example of FIG. 12 in that a pathloss RS is not configured and a pathloss value is configured in TCI state #3. Since the PL value is configured, a UE can determine UL transmission power by directly using the PL value, even when a pathloss RS is not configured.

{Aspect 2-2}

A case where a UL power control parameter is not configured for a UL TCI state or a joint TCI state of a serving cell will be described.

<<Option 1>>

The UE may be configured with a different PL value or relative PL value for each TCI state. In this case, the same default TPC parameter may be used for all TCI states (regardless of a UL reception point or a macro TRP). For each set of TCI states, a different default TPC parameter may be used. Association of the UL reception point and the macro TRP with the default TPC parameter(s) may be configured by RRC signaling or may be defined in a specification in advance.

<<Option 2>>

The UE may be configured with a PL value or a relative PL value for each parameter indicating UL power control (Uplink-powerControlId-r17) associated with a TCI state. In this case, the same default TPC parameter may be used for all TCI states (regardless of a UL reception point or a macro TRP). For each set of TCI states, a different default TPC parameter may be used. Association of the UL reception point and the macro TRP with the default TPC parameter(s) may be configured by RRC signaling or may be defined in a specification in advance.
When a PL value or a relative PL value is configured for each parameter indicating UL power control (Uplink-powerControlId-r17) associated with a TCI state, the UE does not expect for the UL reception point not to be configured (expects for the UL reception point to be configured) for Uplink-powerControlId-r17 associated with the TCI state.
According to the second embodiment, since a PL value associated with a TCI state is configured, it is possible, even when a DL transmission point and a UL reception point are different from each other, to appropriately control UL transmission power for the UL reception point.

<Third Embodiment>

A case where a UL power control parameter is configured (or not configured) for a UL TCI state or a joint TCI state of a serving cell will be described.
Whether or not a PL value or a relative PL value is configured may be determined/configured for the UE for each TRP ID (first TCI state or second TCI in a case of single DCI, and CORESETPoolIndex = {0, 1} in a case of multi-DCI). A TRP ID, a TCI state (TCI state ID), CORESETPoolIndex, and a CORESET may be interchangeably interpreted.
Association between TRP IDs and UL reception points or macro TRPs may be defined in a specification or may be configured for the UE by higher layer signaling/physical layer signaling. For example, when a UL reception point is used, the second TCI state or CORESETPoolIndex = 1 may indicate a UL reception point, for example.
When the indicated TCI state is associated with a macro TRP, the UE may measure PL, based on a configured PL RS. When the indicated TCI is associated with a UL reception point, the UE may use the PL value or the relative PL value associated with the UL reception point for UL transmission power control.
FIG. 14 is a diagram to show power control parameters for TCI state according to the third embodiment. For example, when TCI state #1 is associated with a UL reception point and a PL value is configured for the UE, the UE may ignore "PL (Pathloss) RS = SSB #1" and use the configured PL value for UL transmission power control.
For example, when TCI state #1 is associated with a UL reception point and a relative PL value (PL offset) is configured for the UE, the UE may calculate a PL value, based on indicated "PL (Pathloss) RS = SSB #1" and a configured "PL offset" and use the calculated PL value. For example, the UE may use a value obtained by adding (or subtracting) the PL offset to (from) the PL value based on the PL RS (SSB #1), as the PL value for UL transmission power control.
FIG. 15A and FIG. 15B are diagrams to show examples of a PL value configuration in the third embodiment. In the example of FIG. 15A, the same PL value is configured for a plurality of TCI state IDs. In this case, it is not necessary to designate a TCI state ID for configuration of the PL value. In the example of FIG. 15B, a different PL value is configured for each TCI state ID.
FIG. 16A and FIG. 16B are diagrams to show examples of a relative PL value (PL offset) configuration in the third embodiment. In the example of FIG. 16A, the same relative PL value (PL offset) is configured for a plurality of TCI state IDs. In this case, it is not necessary to designate a TCI state ID for configuration of the relative PL value. In the example of FIG. 16B, a different relative PL value (PL offset) is configured for each TCI state ID.
According to the third embodiment, since a PL value/relative PL value is configured for each TCI state, it is possible to perform appropriate transmission power control for each beam to be transmitted.

<Fourth Embodiment>

A case where a UL power control parameter is configured (or not configured) for a UL TCI state or a joint TCI state of a serving cell will be described.
Whether or not a PL value or a relative PL value is configured may be determined/configured for a UE for each cell/PCI. For example, one cell/PCI may be associated with a UL reception point, and another cell/TRP may be associated with a macro TRP.

The association between TRP IDs and cells/PCIs may be defined in a specification, or may be configured for the UE by higher layer signaling. For example, the PCI of a serving cell may be associated with the TRP ID of a macro TRP, and the PCI of an additional cell/candidate cell may be associated with the TRP ID of a UL reception point.

When the indicated TCI state is associated with the cell/PCI associated with the macro TRP, the UE may measure PL, based on a configured PL RS. When the indicated TCI state is associated with the cell/PCI associated with the UL reception point, the UE may use the PL value or the relative PL (delta PL) value associated with the UL reception point.

The configuration of power control parameters for TCI state according to the fourth embodiment may be similar to the example of FIG. 14. For example, when TCI state #1 is associated with a UL reception point and a PL value is configured for the UE, the UE may ignore "PL (Pathloss) RS = SSB #1" and use the configured PL value for UL transmission power control.

For example, when TCI state #1 is associated with a UL reception point and a relative PL value (PL offset) is configured for the UE, the UE may calculate a PL value, based on indicated "PL (Pathloss) RS = SSB #1" and a configured "PL offset" and use the calculated PL value. For example, the UE may use a value obtained by adding (or subtracting) the PL offset to (from) the PL value based on SSB #1, as the PL value for UL transmission power control.

FIG. 17A and FIG. 17B are diagrams to show examples of a PL value configuration in the fourth embodiment. In the example of FIG. 17A, the same PL value is configured for a plurality of cells/PCIs. In this case, it is not necessary to designate a cell/PCI for configuration of the PL value. In the example of FIG. 17B, a different PL value is configured for each cell/PCI.

FIG. 18A and FIG. 18B are diagrams to show examples of a relative PL value (PL offset) configuration in the fourth embodiment. In the example of FIG. 18A, the same relative PL value (PL offset) is configured for a plurality of cells/PCIs. In this case, it is not necessary to designate a cell/PCI for configuration of the relative PL value. In the example of FIG. 18B, a different relative PL value (PL offset) is configured for each cell/PCI.

The third embodiment and the fourth embodiment may be combined. For example, a PL value/relative PL value may be configured for a combination of a TCI state and a cell/PCI. The same PL value/relative PL value may be configured, or different PL values/relative PL values may be configured, for a plurality of combinations.

According to the fourth embodiment, since a PL value/relative PL value is configured for each cell/PCI, it is possible to perform appropriate transmission power control for each cell/PCI for transmission.

<Fifth Embodiment>

In a fifth embodiment, UL/scenario and the like applied to each embodiment of the present disclosure will be described.

{Option 1}

Any channel/RS (for example, all of an SRS, a PUSCH, a PUCCH, and a PRACH) may be applied as UL in each embodiment.

{Option 2}

A limited channel/RS (for example, at least one of an SRS, a PUSCH, a PUCCH, and a PRACH) may be applied as UL in each embodiment. For example, the UE may not need to transmit all the UL channels/RSs to a UL reception point.

{Option 2-1}

In the unified TCI framework, the example of each of the embodiments may be applied only to UL channels/RSs sharing an indicated joint TCI state/UL TCI state.

{Option 2-2}

Each embodiment may be applied to some resources/resource sets/applications corresponding to a PUSCH/-PUCCH/SRS/PRACH. For example, each embodiment may be applied only to at least one of a dynamic grant PUSCH (scheduled by DCI), a UE-specific PUCCH resource, and an SRS configured with specific usage (for example,

CB/NCB).

For a PRACH, each embodiment may be applied only to PDCCH ordered PRACH transmission. In other words, each embodiment need not be applied to the PRACH of the initial access. In a case of the initial access, the UE may transmit a PRACH to a macro cell. However, even in a case of a PDCCH ordered PRACH (for example, when the UE transmits a PRACH to a UL reception point), the UE may receive a RAR from a macro TRP.

{Option 3}

Each embodiment may be applied only to an intra-cell scenario.

When the examples of the embodiments are not applied, the UE may perform existing operation of PL measurement/calculation (specifically, the UE measures/calculates PL, based on a PL RS from a macro TRP and transmits UL to the macro TRP).

<Sixth Embodiment>

Each embodiment is applicable to various kinds of UL (PRACH/PUSCH/PUCCH/SRS). For example, a UE may control transmission power for transmitting a PRACH/PUSCH/PUCCH/SRS to a UL reception point, based on a configured (received) PL value. For example, the second embodiment is applied to UL configured with a TCI state. When the UL is a PRACH, the UE can transmit the PRACH to the UL reception point, in an RRC connected state. In this case, the UE may control the transmission power of a PRACH, based on the configured PL value. Accordingly, the UE may determine the transmit power control of the PRACH, based on an RRC configuration for configuring a PL value or a relative PL value.

The configuration of a PRACH in the present disclosure may mean a configuration related to a PRACH in RRC/MAC CE/DCI.

{Aspect 6-1}

The TCI state may be configured for each PRACH resource/PRACH configuration. For example, the second to fourth embodiments are applied to a PRACH.

{Aspect 6-2}

The PL value or the relative PL may be configured for the UE for each PRACH configuration.

In a case of PDCCH ordered PRACH, for example, a 1-bit reserved field in DCI may indicate whether to apply the PL value or the relative PL (delta PL) to a triggered PRACH. In this case, the DCI may mean that the PRACH is transmitted to a UL reception point.

When the field indicates 0, the UE may measure PL, based on a configured PL RS. When the field indicates 1, the UE may use the PL value or the relative PL value associated with the UL reception point to control UL (PRACH) transmission power.

According to the present embodiment, for example, even when a PRACH is transmitted to a UL reception point in a case of an RRC connected state, it is possible to appropriately control transmission power.

<Seventh Embodiment>

A plurality of SRSs (beams) may be configured for UL transmission. For each SRS (beam), a PL value/delta PL value may be estimated/configured, to notify the UE of the PL value/delta PL value. For a scheduled PUSCH transmitted by a beam, a corresponding parameter for transmission power control may be used. In this case, the UL reception point corresponding to a specific UL beam may be regarded as being fixed semi-statically. However, UL reception points that receive plurality of different UL beams from the UE may be the same or different.

{Beam Transmission}

FIG. 19 shows an example in which a UE transmits a plurality of beams to the same UL reception point. In the example shown in FIG. 19, the UE transmits all four beams to one (same) reception point (UL reception point 1).

FIG. 20 shows an example in which a UE transmits a plurality of beams to different UL reception points. In the example shown in FIG. 20, the UE transmits two of four beams to UL reception point 1 and the remaining two to UL reception point 2.

Which reception point receives a UL beam from the UE need not be recognized by the UE (need not be transparent to the UE/the UE need not be notified of/configured with this). The network may select an appropriate reception point for a UL beam from the UE, estimate a corresponding PL value, and notify the UE of the PL value.

A channel/signal of a beam of the present embodiment is not limited to an SRS and may be a PUSCH/PUCCH/-PRACH.

{Transmission Power Control}

The relationship between the RS index q($q_d$) of UL pathloss (for example, $PL_{b,f,c}(q_d)$ in equations (1) to (3)) and a PL value/delta-PL value (for example, FIG. 3A and FIG. 3B) may be indicated to the UE via higher layer signaling/physical layer signaling. The UE may use PL associated with the RS index q for UL power calculation, when an SRI designated for UL transmission is associated with the RS index q. When UL is a PRACH, the PL value/delta PL value corresponding to $PL_{b,f,c}$ in equation (4) may be indicated to the UE via higher layer signaling/physical layer signaling.
In the present disclosure, the UE may be notified of a PL value/PL delta value for each RRC/MAC CE/DCI.
According to the present embodiment, since a PL value/delta PL value is estimated/configured for an SRS (beam) for notification to a UE, transmission power can be controlled appropriately for each SRS (beam).

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.
When the notification is performed by a MAC CE, the MAC CE may be identified by a new logical channel ID (LCID) not defined in an existing standard being included in a MAC subheader.
When the notification is performed by DCI, the notification may be performed by a specific field of the DCI, a radio network temporary identifier (RNTI) used for scrambling of cyclic redundancy check (CRC) bits given to the DCI, a format of the DCI, or the like.
Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.
When the notification is performed by a MAC CE, the MAC CE may be identified by a new LCID not defined in existing standards being included in a MAC subheader.
When the notification is performed by UCI, the notification may be transmitted by using a PUCCH or a PUSCH.
Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.
At least one of the above-described embodiments may be applied only to a UE that has reported a specific UE capability or that supports the specific UE capability. Note that "supporting" and "whether to support" may be interchangeably interpreted.
The specific UE capability may indicate at least one of the following:

- supporting of specific

processing/operation/control/information for at least one of the above embodiments;

- supporting of UL transmission (SRS/PUSCH/PUCCH/PRACH) to a UL reception point; and
- number of UL reception points to support.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Notes)

Regarding one embodiment of the present disclosure, the following supplementary notes of the invention will be given.

{Supplementary Note 1}

A terminal including:

a receiving section that receives, from a downlink (DL) transmission point, a Pathloss (PL) value to be used for transmission power control of a Physical Uplink Shared Channel (PUSCH) or a Sounding Reference Signal (SRS); and

a control section that controls, based on the PL value, transmission power of a case where the PUSCH or the SRS is transmitted to an uplink (UL) reception point.

{Supplementary Note 2}

The terminal according to supplementary note 1, wherein
the control section determines, when information indicating the PL value is not configured for a TCI state, that the TCI state is associated with a DL transmission point, and determines, when the information indicating the PL value is configured for the TCI state, that the TCI state is associated with a UL reception point.

{Supplementary Note 3}

The terminal according to supplementary note 1 or 2, wherein
when the PL value is a relative PL value, which is a difference value between a PL value between the DL transmission point and the terminal and a PL value between the UL reception point and the terminal, the receiving section does not receive a configuration of a PL reference signal (RS).

{Supplementary Note 4}

The terminal according to any one of supplementary notes 1 to 3, wherein
the PL value is configured for each TCI state or for each parameter indicating UL power control associated with a TCI state.

(Supplementary Notes)

Regarding one embodiment of the present disclosure, the following supplementary notes of the invention will be further given.

{Supplementary Note 1}

A terminal including:

a receiving section that receives, from a downlink (DL) transmission point, a Pathloss (PL) value to be used for uplink (UL) transmission power control; and

a control section that controls, based on the PL value, transmission power of a case where a UL signal is transmitted to an uplink (UL) reception point, wherein

whether or not the PL value is configured is configured for each ID of a transmission/reception point (TRP) or for each cell.

{Supplementary Note 2}

The terminal according to supplementary note 1, wherein
when the PL value is a relative PL value, which is a difference value between a PL value between the DL transmission point and the terminal and a PL value between the UL reception point and the terminal, the control section controls the transmission power, based on a PL value based on a PL reference signal and the relative PL value configured.

{Supplementary Note 3}

The terminal according to supplementary note 1 or 2, wherein
when a Physical random access channel (PRACH) is transmitted to the UL reception point, the control section controls transmission power of the PRACH, based on the PL value.

{Supplementary Note 4}

The terminal according to any one of supplementary notes 1 to 3, further including
a transmitting section that transmits a plurality of beams to different UL reception points.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

FIG. 21 is a diagram to show an example of a schematic structure of the radio communication system according to one embodiment. A radio communication system 1 (which may be simply referred to as a system 1) may be a system implementing communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

FIG. 22 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

When the base station 10 is a DL transmission point, the transmitting/receiving section 120 may transmit a Pathloss (PL) value to be used for transmission power control of a Physical Uplink Shared Channel (PUSCH) or a Sounding Reference Signal (SRS). The control section 110 may assume that transmission power of a case where the PUSCH or the SRS is transmitted to an uplink (UL) reception point is controlled based on the PL value.

When the base station 10 is a UL reception point, the base station 10 may control reception of the PUSCH or the SRS for which transmission power is controlled based on the PL value.

When the base station 10 is a DL transmission point, the base station 10 may transmit a Pathloss (PL) value to be used for uplink (UL) transmission power control. The control section 110 may assume that transmission power of a case where a UL signal is transmitted to an uplink (UL) reception point is controlled based on the PL value.

When the base station 10 is a UL reception point, the base station 10 may control reception of a UL signal for which transmission power is controlled based on the PL value.

Whether or not the PL value is configured may be configured for each ID of a transmission/reception point (TRP) or for each cell.

(User Terminal)

FIG. 23 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive, from a downlink (DL) transmission point, a Pathloss (PL) value to be used for transmission power control of a Physical Uplink Shared Channel (PUSCH) or a Sounding Reference Signal (SRS).

The control section 210 may control transmission power of a case where the PUSCH or the SRS is transmitted to an uplink (UL) reception point, based on the PL value.

The control section 210 may determine, when information indicating the PL value is not configured for a TCI state, that the TCI state is associated with a DL transmission point, and determines, when the information indicating the PL value is configured for the TCI state, that the TCI state is associated with a UL reception point.

When the PL value is a relative PL value, which is a difference value between a PL value between the DL transmission point and the terminal and a PL value between the UL reception point and the terminal, the receiving section need not receive a configuration of a PL reference signal (RS).

The PL value may be configured for each TCI state or for each parameter indicating UL power control associated with a TCI state.

The transmitting/receiving section 220 may receive a Pathloss (PL) value to be used for uplink (UL) transmission power control, from a downlink (DL) transmission point.

The control section 210 may control transmission power of a case where a UL signal is transmitted to an uplink (UL) reception point, based on the PL value.
Whether or not the PL value is configured may be configured for each ID of a transmission/reception point (TRP) or for each cell.
When the PL value is a relative PL value, which is a difference value between a PL value between the DL transmission point and the terminal and a PL value between the UL reception point and the terminal, the control section 210 may control the transmission power, based on a PL value based on a PL reference signal and the relative PL value configured.
When a Physical random access channel (PRACH) is transmitted as the UL signal to the UL reception point, the control section 210 may control transmission power of the PRACH, based on the PL value.
The transmitting/receiving section 220 may transmit a plurality of beams to different UL reception points.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.
Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.
For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.
Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.
For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.
Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.
The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.
Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.
The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

**1.** A terminal comprising:

a receiving section that receives, from a downlink (DL) transmission point, a Pathloss (PL) value to be used for uplink (UL) transmission power control; and

a control section that controls, based on the PL value, transmission power of a case where a UL signal is transmitted to an uplink (UL) reception point, wherein

whether or not the PL value is configured is configured for each ID of a transmission/reception point (TRP) or for each cell.

**2.** The terminal according to claim 1, wherein
when the PL value is a relative PL value, which is a difference value between a PL value between the DL transmission point and the terminal and a PL value between the UL reception point and the terminal, the control section controls the transmission power, based on a PL value based on a PL reference signal and the relative PL value configured.

**3.** The terminal according to claim 1, wherein
when a Physical random access channel (PRACH) is transmitted to the UL reception point as the UL signal, the control section controls transmission power of the PRACH, based on the PL value.

**4.** The terminal according to claim 1, further comprising
a transmitting section that transmits a plurality of beams to different UL reception points.

5. A radio communication method for a terminal, the radio communication method comprising:

receiving, from a downlink (DL) transmission point, a Pathloss (PL) value to be used for uplink (UL) transmission power control; and
controlling, based on the PL value, transmission power of a case where a UL signal is transmitted to an uplink (UL) reception point, wherein
whether or not the PL value is configured is configured for each ID of a transmission/reception point (TRP) or for each cell.

6. A base station comprising:

a transmitting section that transmits a Pathloss (PL) value to be used for uplink (UL) transmission power control; and
a control section that assumes that transmission power of a case where a UL signal is transmitted to an uplink (UL) reception point is controlled based on the PL value, wherein
whether or not the PL value is configured is configured for each ID of a transmission/reception point (TRP) or for each cell.

FIG.1B

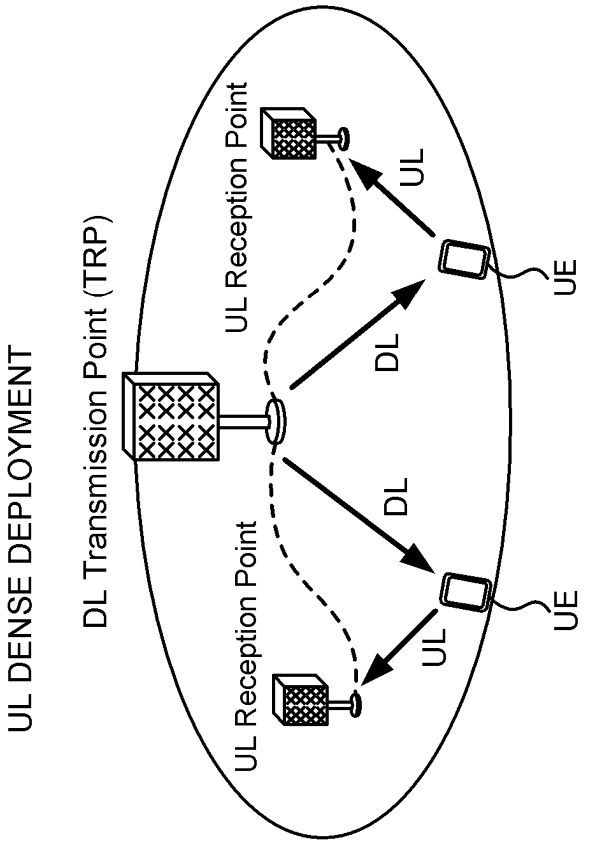
UL DENSE DEPLOYMENT
DL Transmission Point (TRP)
UL Reception Point
UL Reception Point
DL
DL
UL
UL
UE
UE

FIG.1A

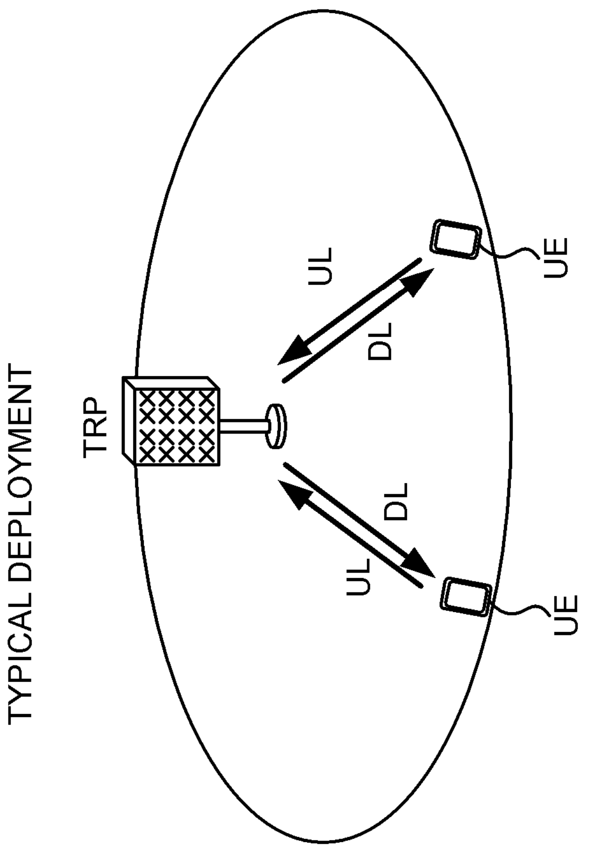
TYPICAL DEPLOYMENT
TRP
DL
UL
DL
UL
UE
UE

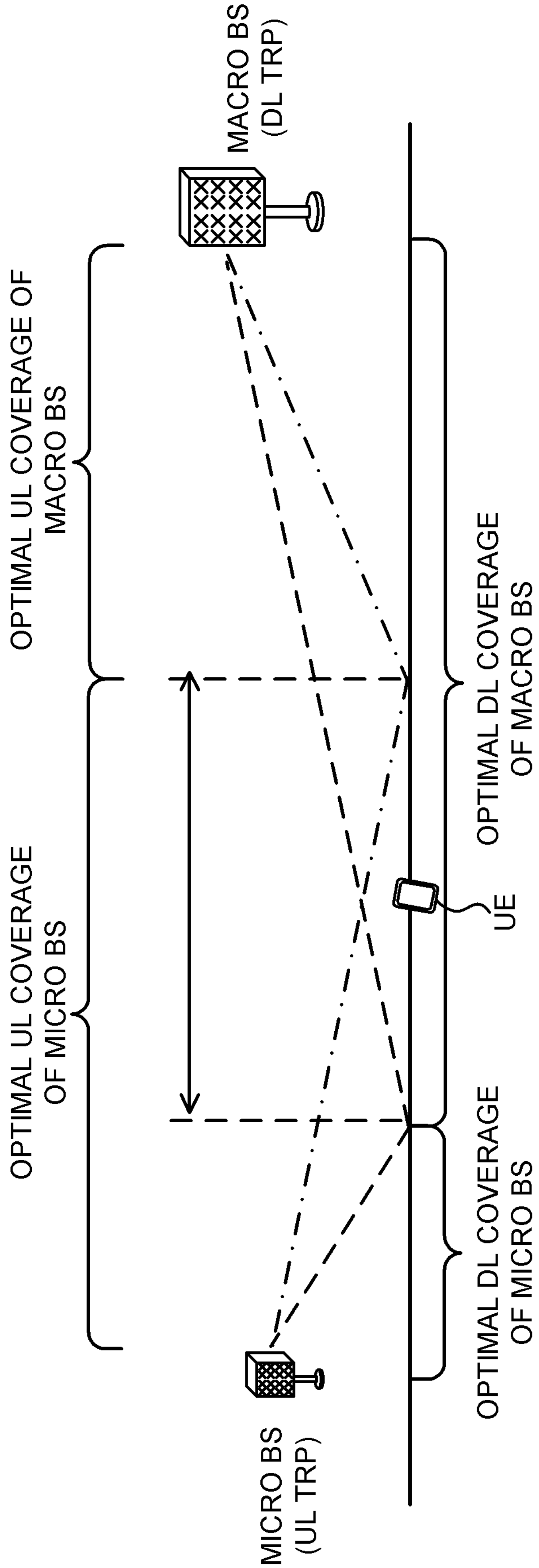
MACRO BS
(DL TRP)
OPTIMAL UL COVERAGE OF
MACRO BS
OPTIMAL DL COVERAGE
OF MACRO BS
UE
OPTIMAL UL COVERAGE
OF MICRO BS
OPTIMAL DL COVERAGE
OF MICRO BS
MICRO BS
(UL TRP)

FIG.2

FIG.3A

| | |
|---|---|
| RS index 1 | PL value 1 |
| RS index 2 | PL value 2 |
| RS index 3 | PL value 3 |

FIG.3B

| | |
|---|---|
| RS index 1 | PL-delta value 1 |
| RS index 2 | PL-delta value 2 |
| RS index 3 | PL-delta value 3 |

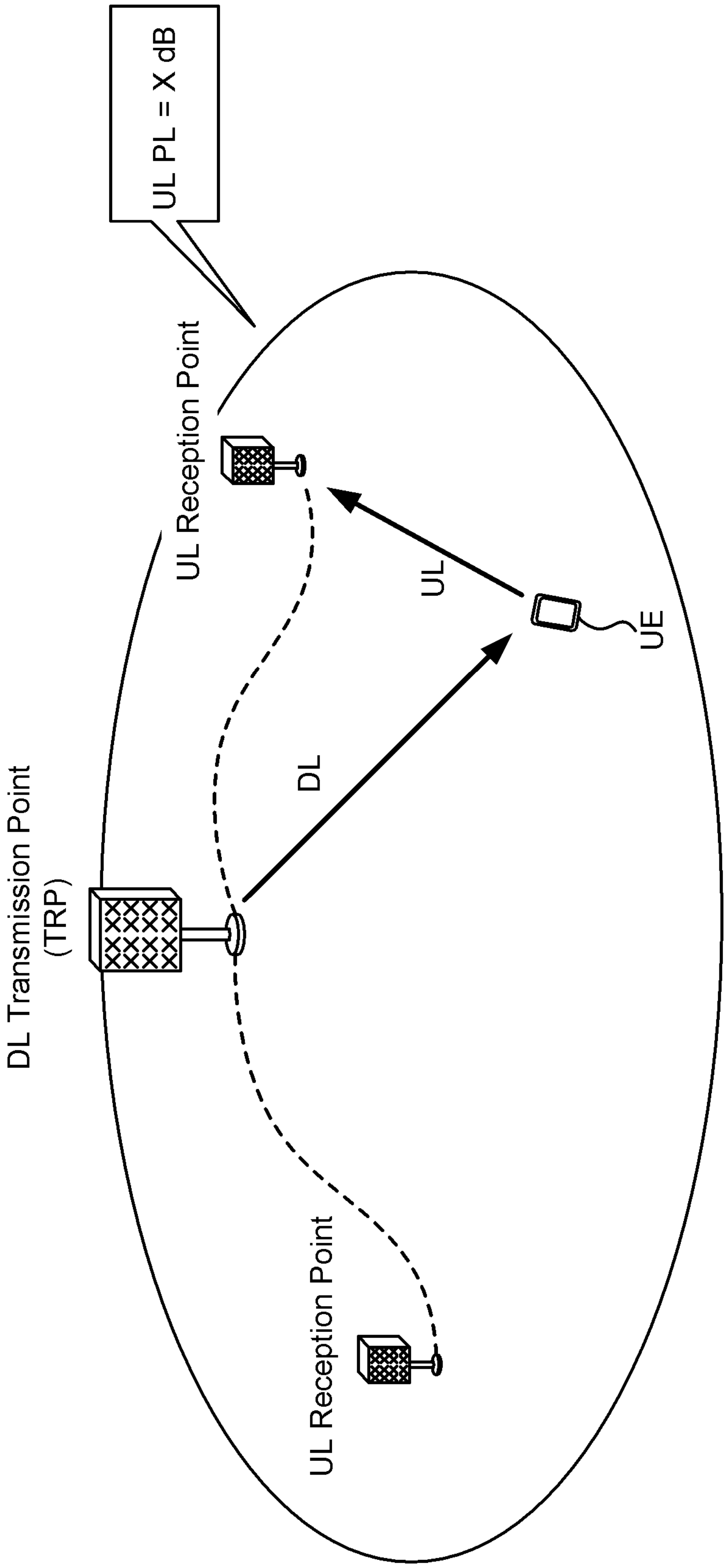
UL PL = X dB
UL Reception Point
UL
UE
DL
DL Transmission Point
(TRP)
UL Reception Point

FIG.4

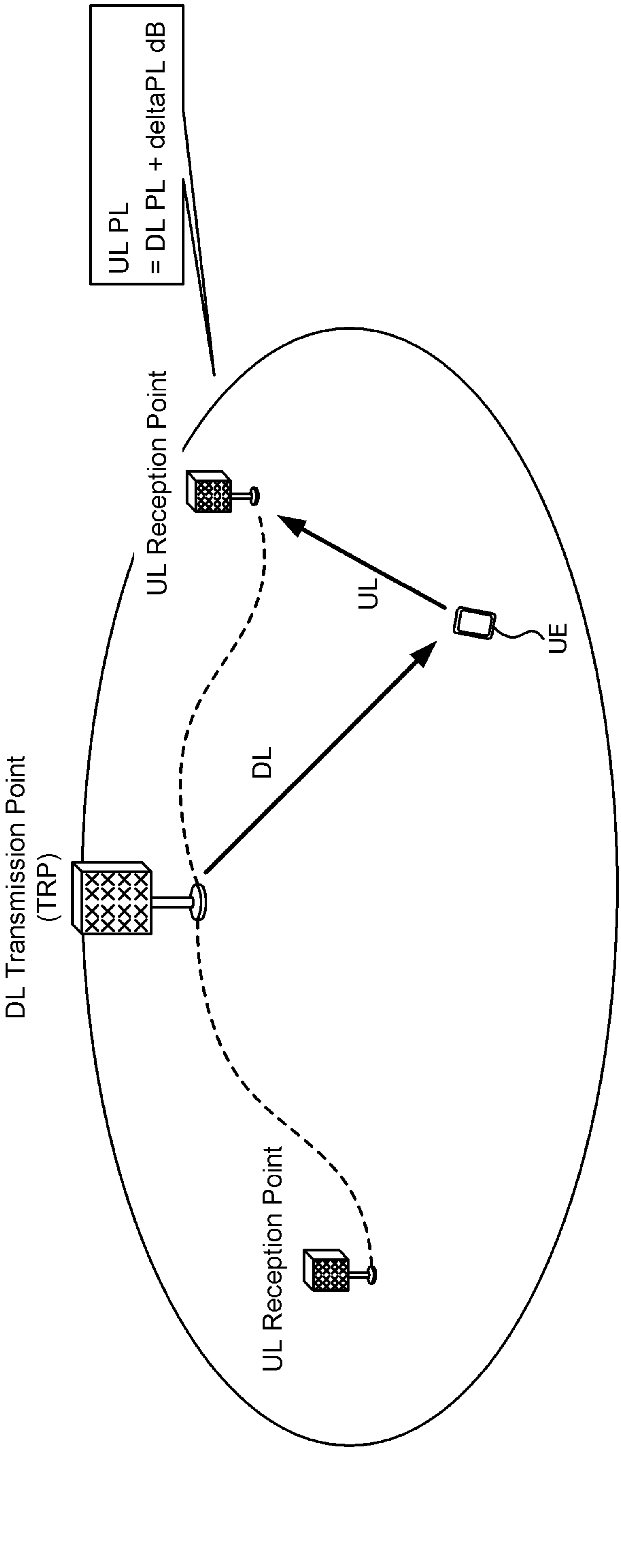
UL PL
= DL PL + deltaPL dB
UL Reception Point
UL
UE
DL
DL Transmission Point
(TRP)
UL Reception Point

FIG.5

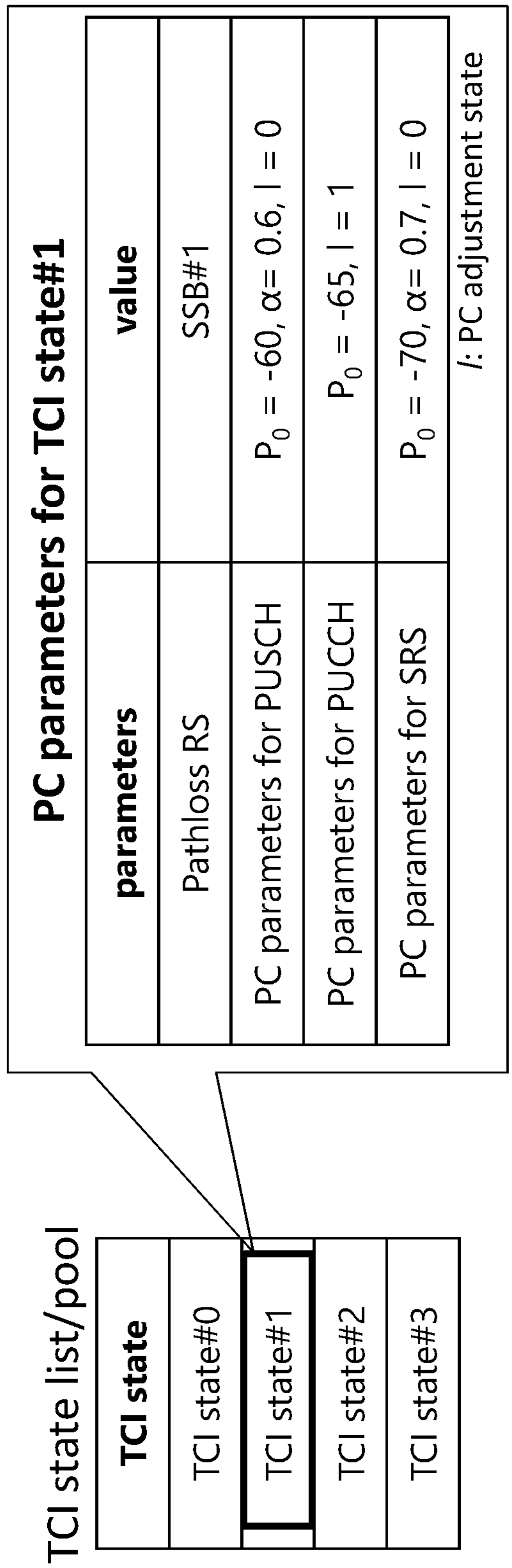
TCI state list/pool
TCI state
TCI state#0
TCI state#1
TCI state#2
TCI state#3
PC parameters for TCI state#1
parameters
value
Pathloss RS
SSB#1
PC parameters for PUSCH
P0 = -60, α= 0.6, l = 0
PC parameters for PUCCH
P0 = -65, l = 1
PC parameters for SRS
P0 = -70, α= 0.7, l = 0
l: PC adjustment state

FIG.6

***TCI-State* information element**

```
-- ASN1START
-- TAG-TCI-STATE-START

TCI-State ::=                       SEQUENCE {
    tci-StateId                         TCI-StateId,
    qcl-Type1                           QCL-Info,
    qcl-Type2                           QCL-Info
OPTIONAL,   -- Need R
    ...,
    [[
    additionalPCI-r17                   AdditionalPCIIndex-r17
OPTIONAL,   -- Need R
    pathlossReferenceRS-Id-r17          PathlossReferenceRS-Id-r17
OPTIONAL,   -- Cond JointTCI1
    ul-powerControl-r17                 Uplink-powerControlId-r17
OPTIONAL    -- Cond JointTCI
    ]]

}

QCL-Info ::=                        SEQUENCE {
    cell                                ServCellIndex
OPTIONAL,   -- Need R
    bwp-Id                              BWP-Id
OPTIONAL, -- Cond CSI-RS-Indicated
    referenceSignal                     CHOICE {
        csi-rs                              NZP-CSI-RS-ResourceId,
        ssb                                 SSB-Index
    },
    qcl-Type                            ENUMERATED {typeA, typeB, typeC, typeD},
    ...
}
```

FIG.7

FIG.8A

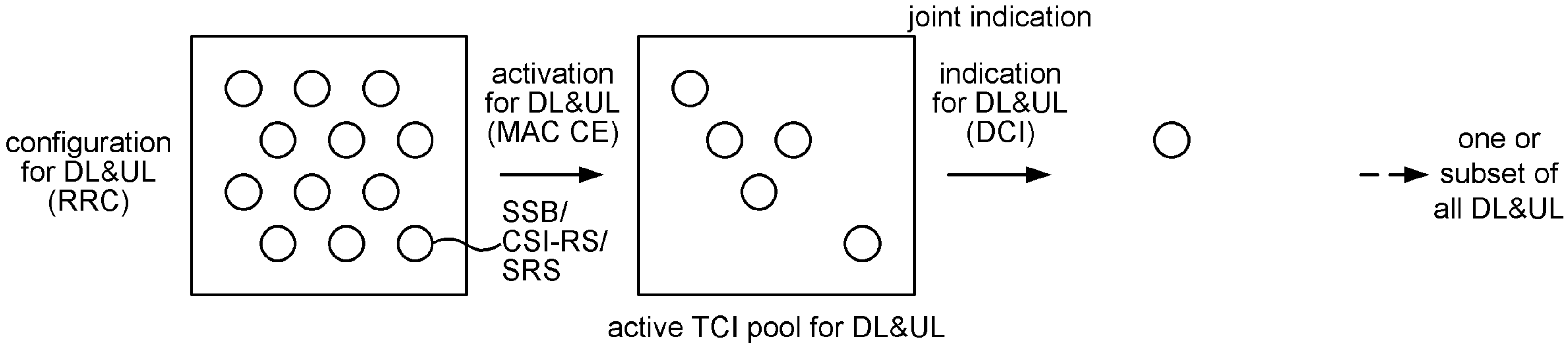
configuration
for DL&UL
(RRC)
activation
for DL&UL
(MAC CE)
SSB/
CSI-RS/
SRS
joint indication
indication
for DL&UL
(DCI)
active TCI pool for DL&UL
one or
subset of
all DL&UL

FIG.8B

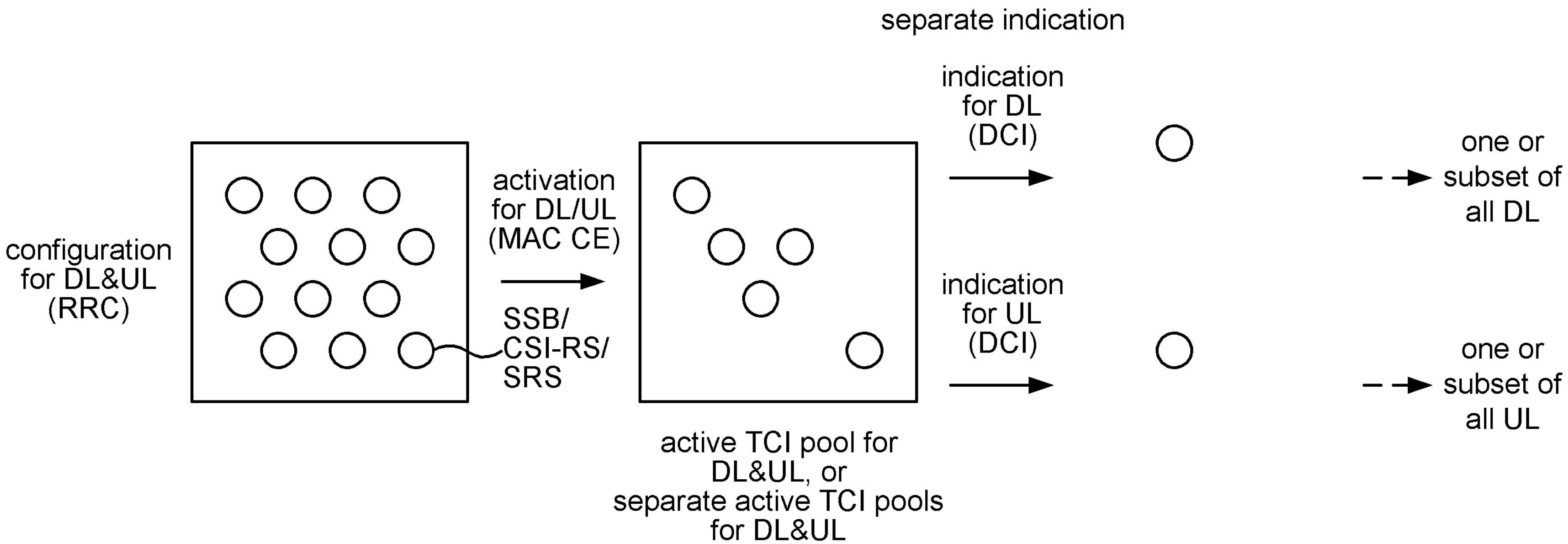
configuration
for DL&UL
(RRC)
activation
for DL/UL
(MAC CE)
SSB/
CSI-RS/
SRS
separate indication
indication
for DL
(DCI)
indication
for UL
(DCI)
active TCI pool for
DL&UL, or
separate active TCI pools
for DL&UL
one or
subset of
all DL
one or
subset of
all UL

FIG.9A

***BWP-UplinkDedicated* information element**

```
-- ASN1START
-- TAG-BWP-UPLINKDEDICATED-START

BWP-UplinkDedicated ::=             SEQUENCE {
......
    ul-TCI-StateList-r17                CHOICE {
        explicitlist                        SEQUENCE {
            ul-TCI-ToAddModList-r17             SEQUENCE (SIZE (1..maxUL-TCI-r17)) OF TCI-UL-State-r17          OPTIONAL,   --
Need N
            ul-TCI-ToReleaseList-r17            SEQUENCE (SIZE (1..maxUL-TCI-r17)) OF TCI-UL-State-Id-r17       OPTIONAL    --
Need N
        },
        unifiedTCI-StateRef-r17         ServingCellAndBWP-Id-r17
    }                                                                                                           OPTIONAL,  --
Need R
    ul-powerControl-r17                Uplink-powerControlId-r17                                                OPTIONAL,  --
Cond NoTCI-PC
......
}
```

FIG.9B

***Uplink-PowerControl* information element**

```
-- ASN1START
-- TAG-UPLINK-POWERCONTROL-START

Uplink-powerControl-r17  ::= SEQUENCE {
    ul-powercontrolId-r17       Uplink-powerControlId-r17,
    p0AlphaSetforPUSCH-r17      P0AlphaSet-r17                                                  OPTIONAL, -- Need R
    p0AlphaSetforPUCCH-r17      P0AlphaSet-r17                                                  OPTIONAL, -- Need R
    p0AlphaSetforSRS-r17        P0AlphaSet-r17                                                  OPTIONAL  -- Need R
}

P0AlphaSet-r17 ::=          SEQUENCE {
    p0-r17                      INTEGER (-16..15)                                               OPTIONAL, -- Need R
    alpha-r17                   Alpha                                                           OPTIONAL, -- Need R
    closedLoopIndex-r17         ENUMERATED { i0, i1 }
}
```

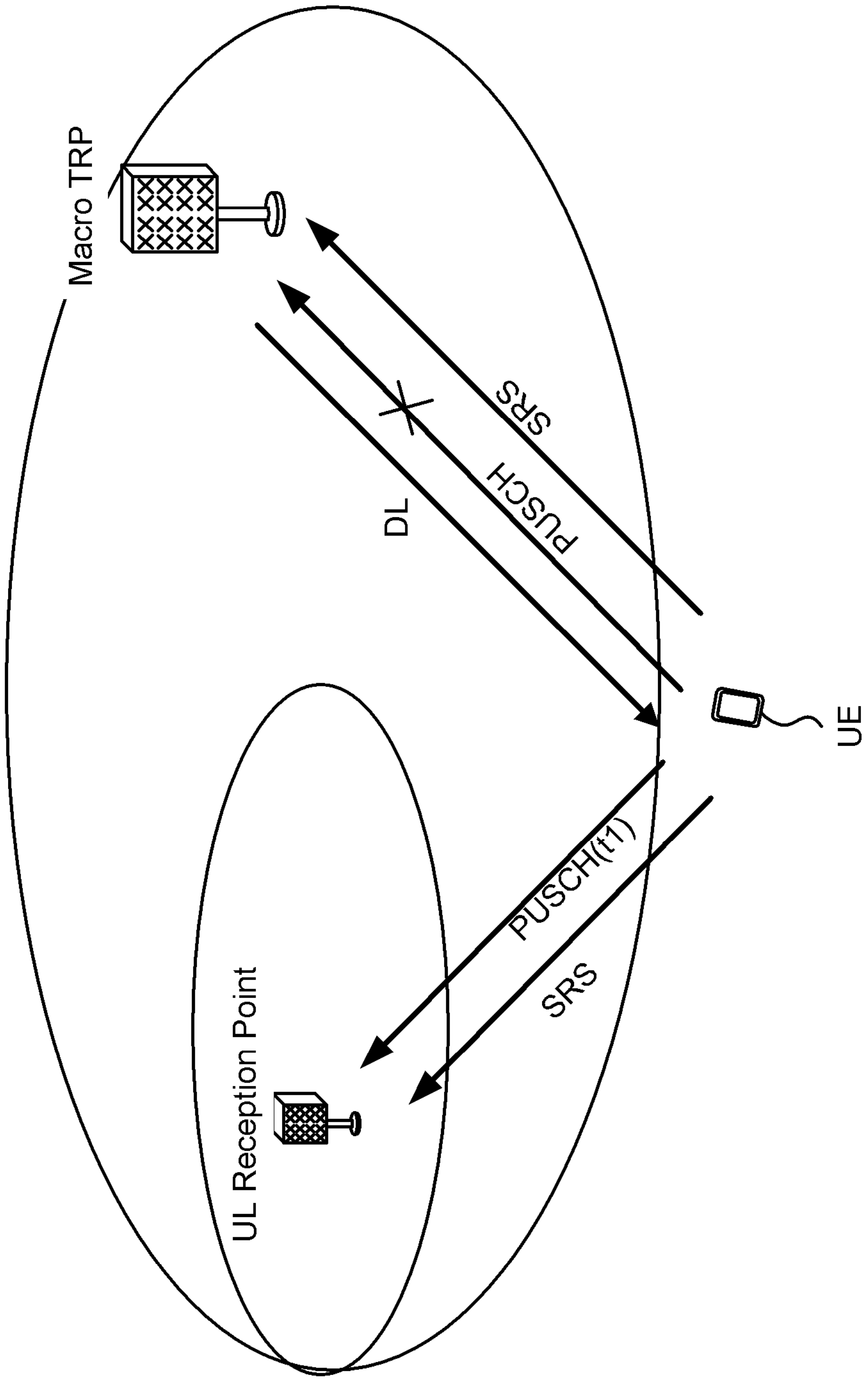


FIG.10

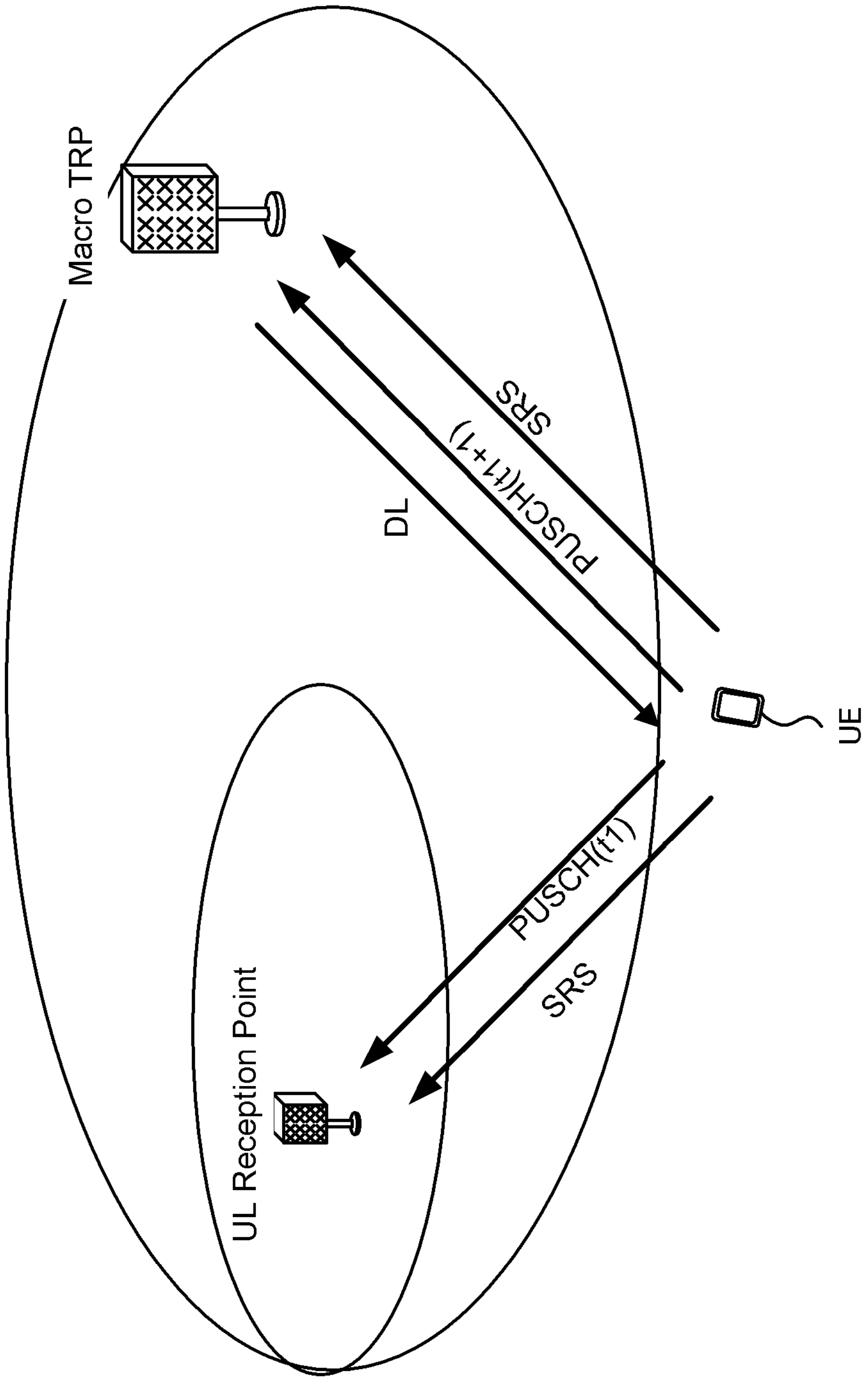


FIG.11

**PC parameters for TCI state#1 (for macro TRP)**

| parameters | value |
|---|---|
| Pathloss RS | SSB#1 |
| PC parameters for PUSCH | $P_0$ = -60, α= 0.6, l = 0 |
| PC parameters for PUCCH | $P_0$ = -65, l = 1 |
| PC parameters for SRS | $P_0$ = -70, α= 0.7, l = 0 |

*l*: PC adjustment state

TCI state list/pool

| TCI state |
|---|
| TCI state#0 |
| TCI state#1 |
| TCI state#2 |
| TCI state#3 |

**PC parameters for TCI state#3 (for UL only TRP)**

| parameters | value |
|---|---|
| Pathloss RS | SSB#3 |
| PC parameters for PUSCH | $P_0$ = -60, α= 0.6, l = 0 |
| PC parameters for PUCCH | $P_0$ = -65, l = 1 |
| PC parameters for SRS | $P_0$ = -70, α= 0.7, l = 0 |
| Palthloss offset | +20 dB |

*l*: PC adjustment state

FIG.12

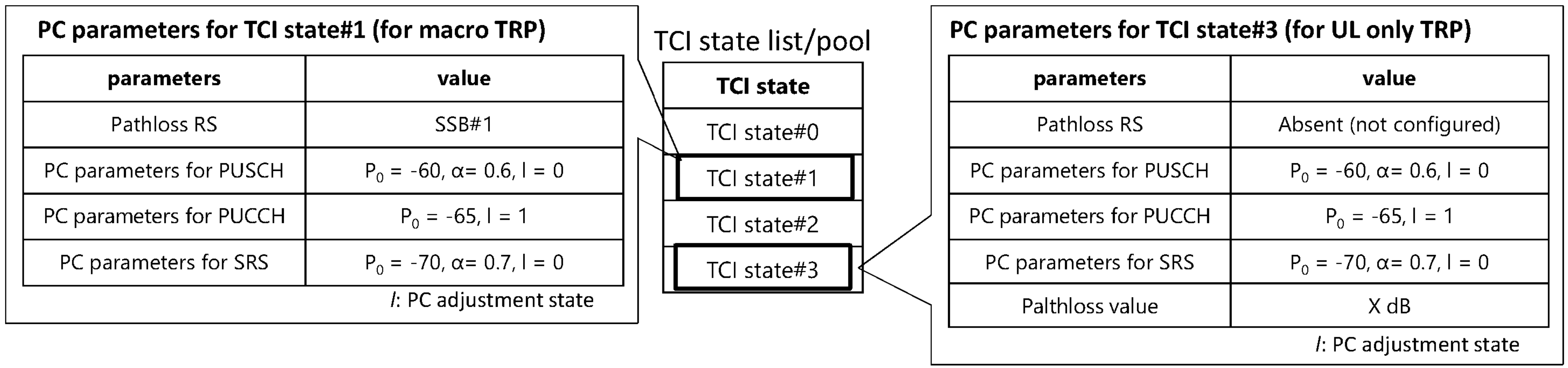
PC parameters for TCI state#1 (for macro TRP)
parameters
value
Pathloss RS
SSB#1
PC parameters for PUSCH
$P_0$ = -60, α= 0.6, l = 0
PC parameters for PUCCH
$P_0$ = -65, l = 1
PC parameters for SRS
$P_0$ = -70, α= 0.7, l = 0
l: PC adjustment state
TCI state list/pool
TCI state
TCI state#0
TCI state#1
TCI state#2
TCI state#3
PC parameters for TCI state#3 (for UL only TRP)
parameters
value
Pathloss RS
Absent (not configured)
PC parameters for PUSCH
$P_0$ = -60, α= 0.6, l = 0
PC parameters for PUCCH
$P_0$ = -65, l = 1
PC parameters for SRS
$P_0$ = -70, α= 0.7, l = 0
Palthloss value
X dB
l: PC adjustment state

FIG.13

TCI state list/pool

| TCI state |
|---|
| TCI state#0 |
| TCI state#1 |
| TCI state#2 |
| TCI state#3 |

**PC parameters for TCI state#1**

| parameters | value |
|---|---|
| Pathloss RS | SSB#1 |
| PC parameters for PUSCH | $P_0$ = -60, α= 0.6, l = 0 |
| PC parameters for PUCCH | $P_0$ = -65, l = 1 |
| PC parameters for SRS | $P_0$ = -70, α= 0.7, l = 0 |

*l*: PC adjustment state

FIG.14

FIG.15A

| PL value |
|---|
| X dB |

FIG.15B

| TCI state | PL value |
|---|---|
| TCI state#1 | X1 dB |
| TCI state#2 | X2 dB |
| TCI state#3 | X3 dB |
| ... | ... |

FIG.16A

| PL offset |
| --- |
| X dB |

FIG.16B

| TCI state | PL offset |
| --- | --- |
| TCI state#1 | X1 dB |
| TCI state#2 | X2 dB |
| TCI state#3 | X3 dB |
| ... | ... |

FIG.17A

| PL value |
|---|
| X dB |

FIG.17B

| cell/PCI | PL value |
|---|---|
| PCI#1 | X1 dB |
| PCI#2 | X2 dB |
| PCI#3 | X3 dB |
| ... | ... |

FIG.18A

| PL offset |
|---|
| X dB |

FIG.18B

| cell/PCI | PL offset |
|---|---|
| PCI#1 | X1 dB |
| PCI#2 | X2 dB |
| PCI#3 | X3 dB |
| ... | ... |

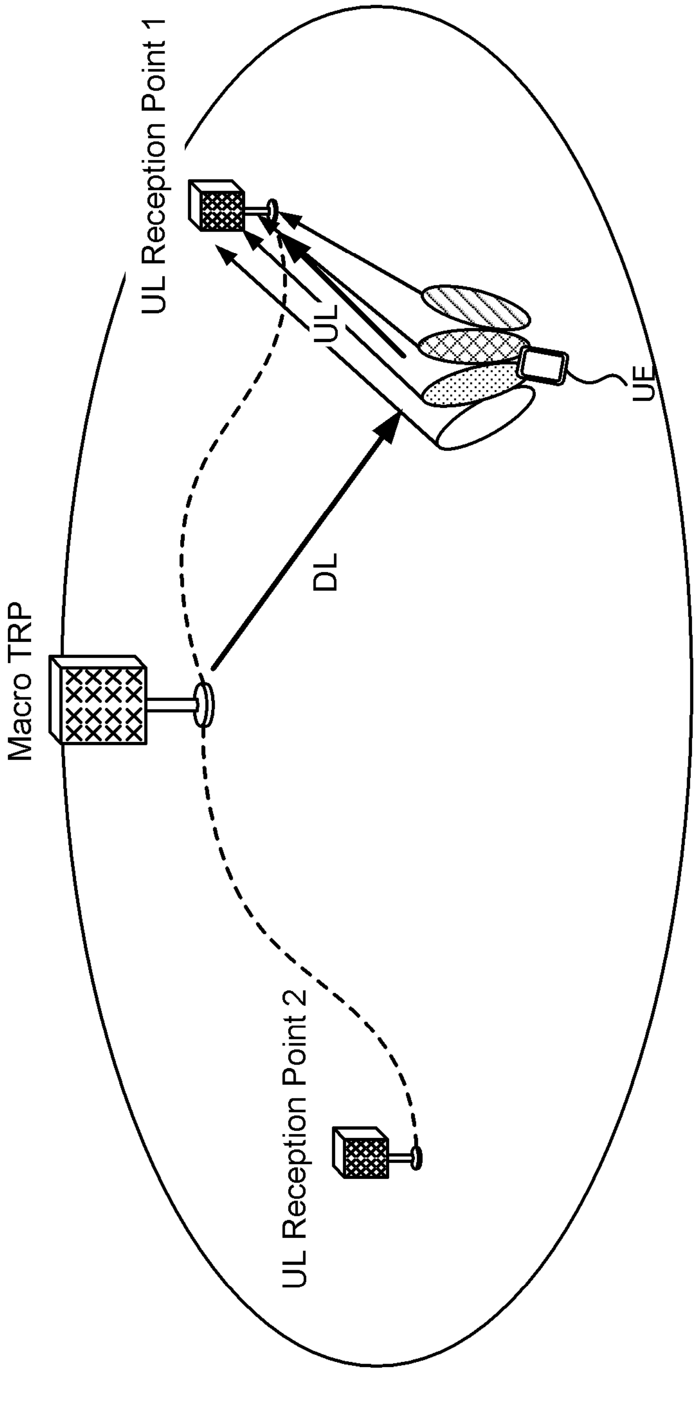


FIG.19

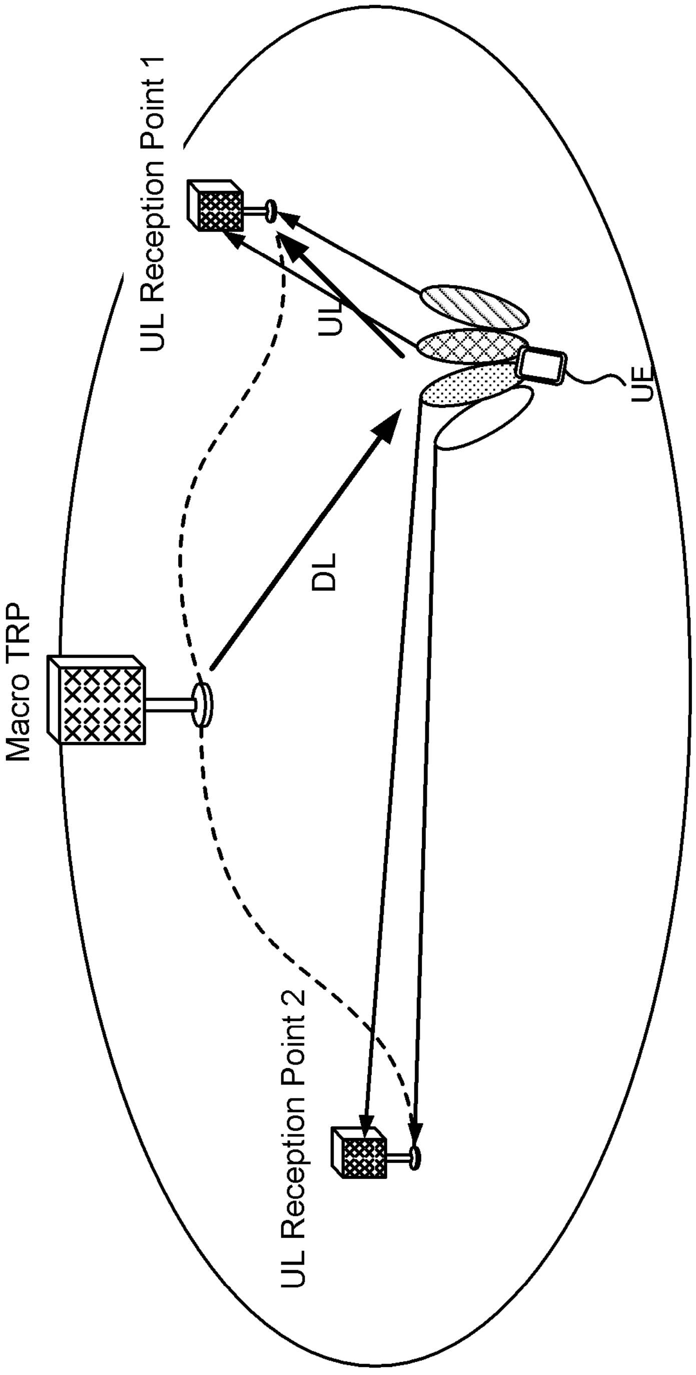


FIG.20

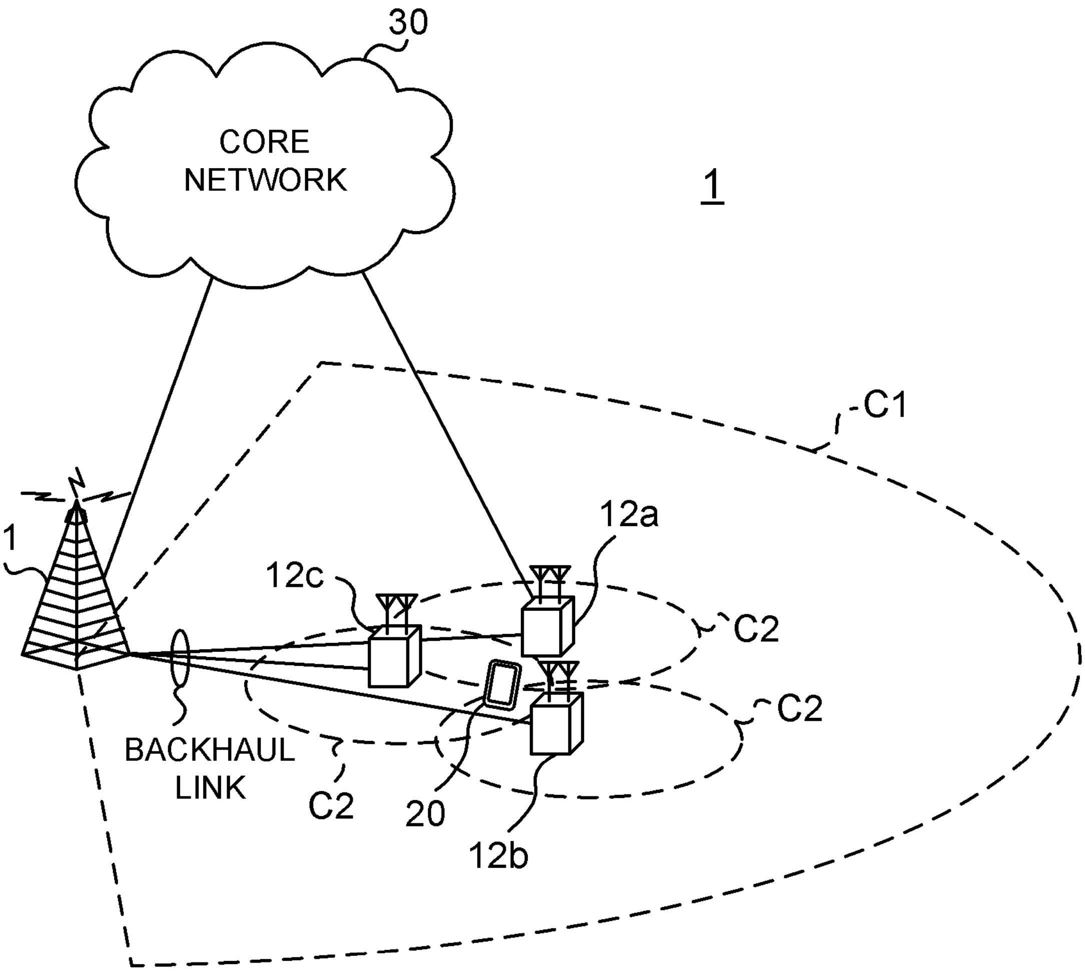


FIG.21

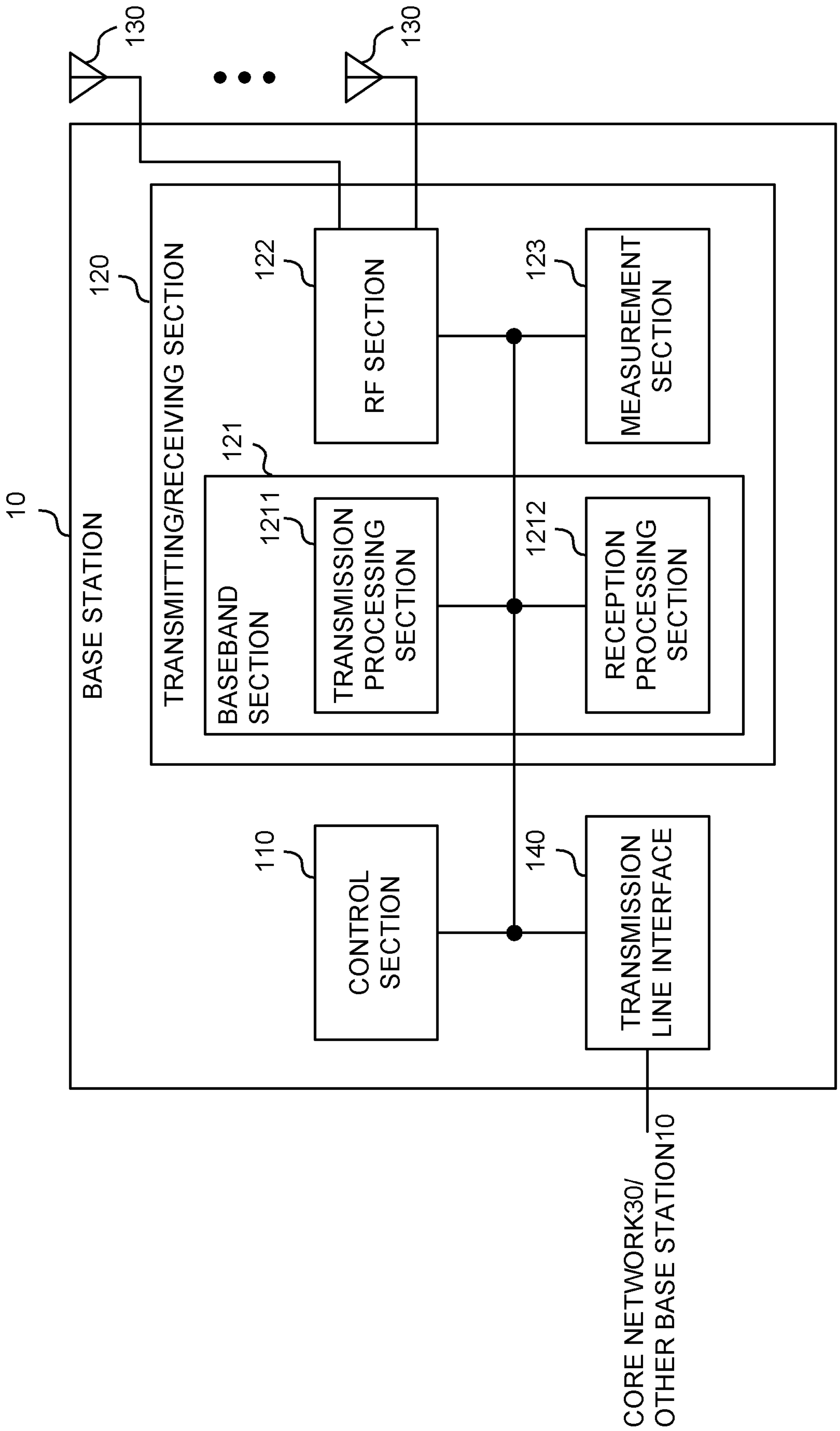
10
BASE STATION
120
TRANSMITTING/RECEIVING SECTION
121
BASEBAND SECTION
1211
TRANSMISSION PROCESSING SECTION
1212
RECEPTION PROCESSING SECTION
122
RF SECTION
123
MEASUREMENT SECTION
130
130
110
CONTROL SECTION
140
TRANSMISSION LINE INTERFACE
CORE NETWORK30/
OTHER BASE STATION10

FIG.22

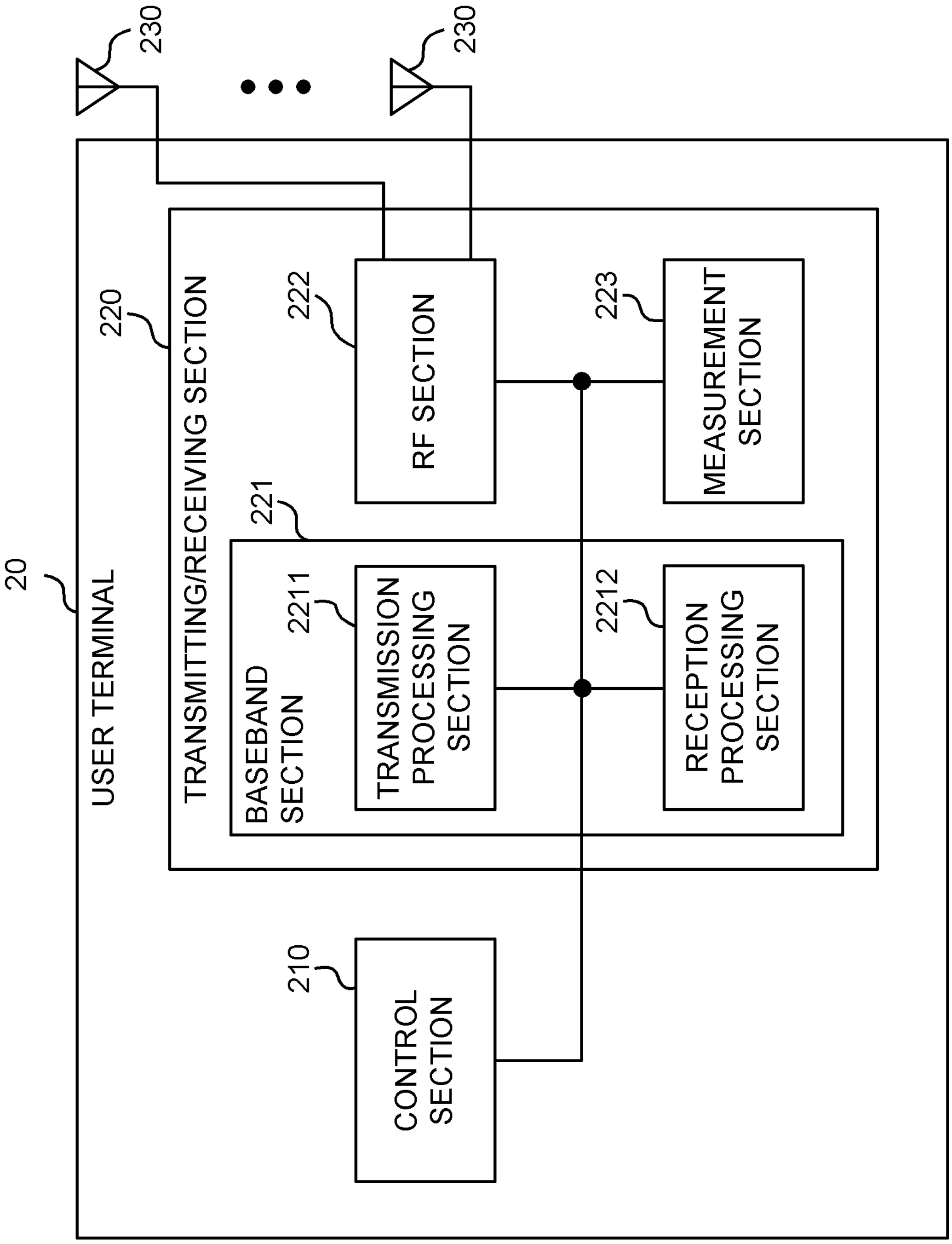
230
230
USER TERMINAL
20
TRANSMITTING/RECEIVING SECTION
220
RF SECTION
222
MEASUREMENT SECTION
223
BASEBAND SECTION
221
TRANSMISSION PROCESSING SECTION
2211
RECEPTION PROCESSING SECTION
2212
CONTROL SECTION
210

FIG.23

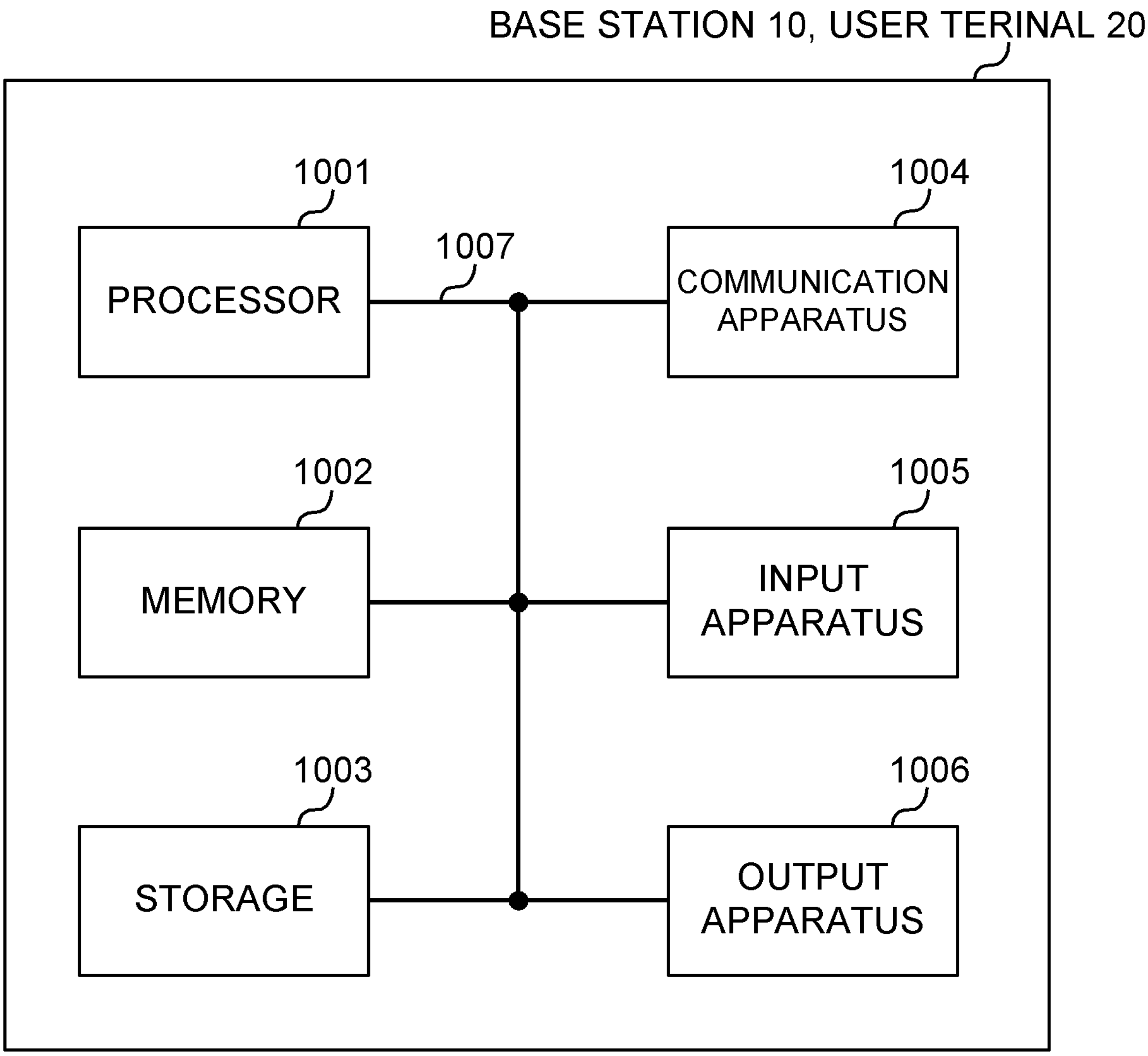
BASE STATION 10, USER TERINAL 20
1001
PROCESSOR
1007
1004
COMMUNICATION APPARATUS
1002
MEMORY
1005
INPUT APPARATUS
1003
STORAGE
1006
OUTPUT APPARATUS

FIG.24

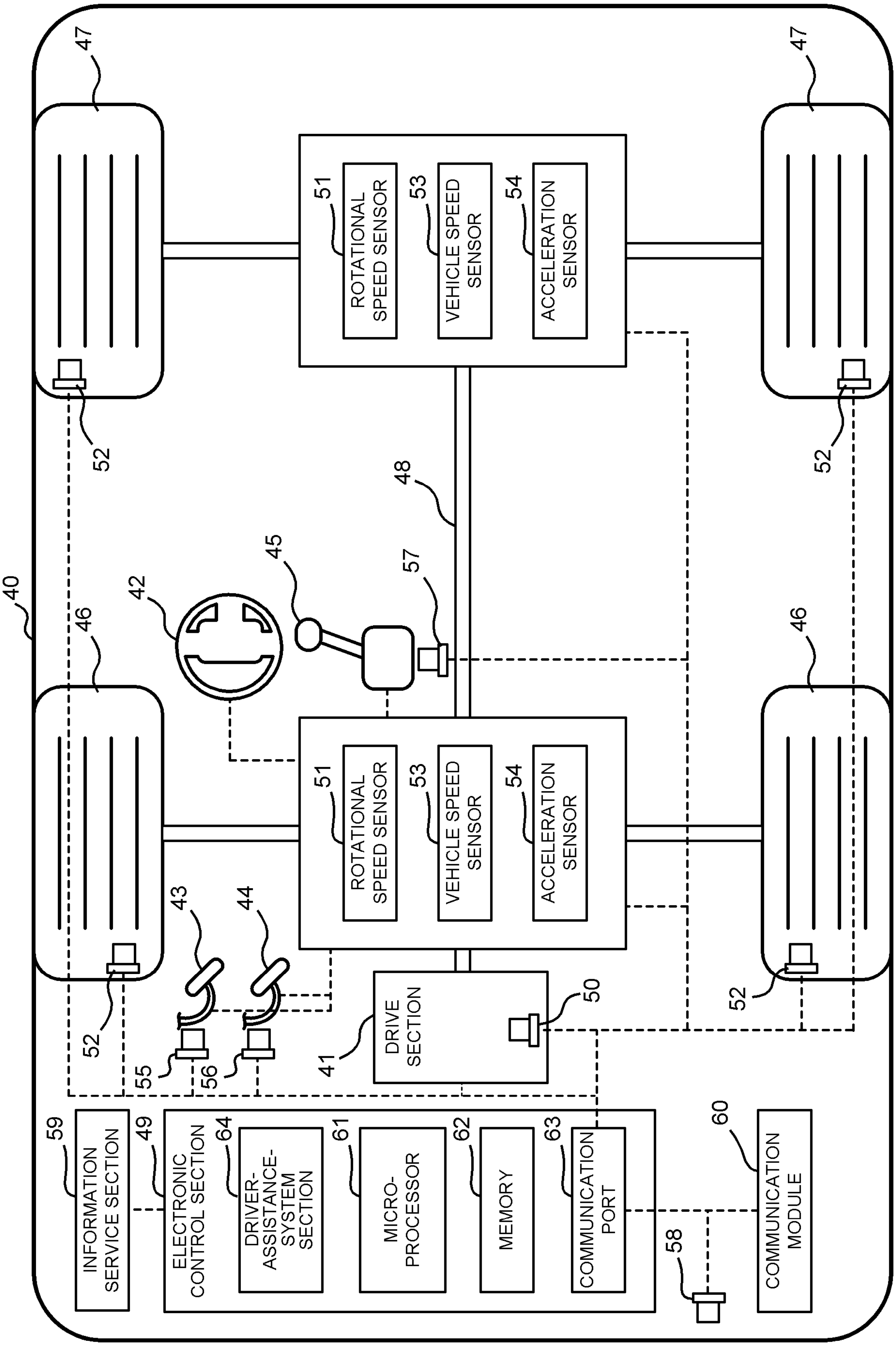
40
47
47
51
ROTATIONAL SPEED SENSOR
53
VEHICLE SPEED SENSOR
54
ACCELERATION SENSOR
52
52
48
45
42
57
46
46
51
ROTATIONAL SPEED SENSOR
53
VEHICLE SPEED SENSOR
54
ACCELERATION SENSOR
43
44
52
52
55
56
41
DRIVE SECTION
50
59
INFORMATION SERVICE SECTION
49
ELECTRONIC CONTROL SECTION
64
DRIVER-ASSISTANCE-SYSTEM SECTION
61
MICRO-PROCESSOR
62
MEMORY
63
COMMUNICATION PORT
58
60
COMMUNICATION MODULE

FIG.25

## INTERNATIONAL SEARCH REPORT

International application No. **PCT/JP2023/033754**

**A. CLASSIFICATION OF SUBJECT MATTER**

***H04W 52/24***(2009.01)i; ***H04W 16/28***(2009.01)i; ***H04W 52/38***(2009.01)i; ***H04W 74/0833***(2024.01)i
FI: H04W52/24; H04W52/38; H04W74/0833; H04W16/28

According to International Patent Classification (IPC) or to both national classification and IPC

**B. FIELDS SEARCHED**

Minimum documentation searched (classification system followed by classification symbols)

H04W52/24; H04W16/28; H04W52/38; H04W74/0833

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-202592 A (MITSUBISHI ELECTRIC CORPORATION) 17 December 2020 (2020-12-17) paragraphs [0274], [0316]-[0322], [0334]-[0337] | 1-3, 5-6 |
| Y | NTT DOCOMO, INC. Email discussion summary for [RAN-R18-WS-eMBB-NTT_DOCOMO]. 3GPP TSG RAN adhoc_2021_06_RAN_Rel18_WS RWS-210537. Internet<URL:https://www.3gpp.org/ftp/tsg_ran/TSG_RAN/TSGR_AHs/2021_06_RAN_Rel18_WS/Docs/RWS-210537.zip>. 25 June 2021 pp. 6, 8-9 | 1, 4-6 |
| Y | NTT DOCOMO, INC. Views on Rel-19 MIMO/UL enhancements. 3GPP TSG RAN #101 RP-232073. Internet<URL:https://www.3gpp.org/ftp/tsg_ran/TSG_RAN/TSGR_101/Docs/RP-232073.zip>. 04 September 2023 p. 2 | 1, 4-6 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/033754**

| Patent document cited in search report | Publication date (day/month/year) | Patent family member(s) | Publication date (day/month/year) |
|---|---|---|---|
| JP 2020-202592 A | 17 December 2020 | US 2014/0036822 A1<br>paragraphs [0316], [0358]-[0364], [0376]-[0379]<br>WO 2012/137619 A1<br>EP 2696617 A1<br>CN 103444221 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010